(19) Europäisches Patentamt
European Patent Office
Office européen des brevets

(11) **EP 4 520 185 B1**

(12) **EUROPEAN PATENT SPECIFICATION**

(45) Date of publication and mention
of the grant of the patent:
**13.08.2025 Bulletin 2025/33**

(21) Application number: **24197679.4**

(22) Date of filing: **30.08.2024**

(51) International Patent Classification (IPC):
*A23J 3/14* (2006.01)     *A23J 3/16* (2006.01)
*A23J 3/18* (2006.01)     *A23J 3/22* (2006.01)
*A23J 3/26* (2006.01)

(52) Cooperative Patent Classification (CPC):
**A23J 3/26; A23J 3/14; A23J 3/16; A23J 3/18;
A23J 3/225; A23J 3/227**

(54) **METHOD OF PRODUCING PROTEIN FOOD MATERIAL, PROTEIN FOOD MATERIAL, AND MOLDED MEAT ALTERNATIVE**

VERFAHREN ZUR HERSTELLUNG VON PROTEINNAHRUNGSMITTELMATERIAL, PROTEINNAHRUNGSMITTELMATERIAL UND GEFORMTES FLEISCHALTERNATIVE

PROCÉDÉ DE PRODUCTION DE MATIÈRE ALIMENTAIRE PROTÉIQUE, MATIÈRE ALIMENTAIRE PROTÉIQUE ET SUBSTITUT DE VIANDE MOULÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.09.2023 JP 2023145665**

(43) Date of publication of application:
**12.03.2025 Bulletin 2025/11**

(73) Proprietor: **FUJIFILM Corporation
Tokyo 106-8620 (JP)**

(72) Inventors:
• **YAMAMOTO, Kenichi
No. 577, Ushijima, Kaisei-machi, Ashigarakami-gun,
Kanagawa, 258-8577 (JP)**
• **KAMINAGA, Kuniyuki
No. 577, Ushijima, Kaisei-machi, Ashigarakami-gun,
Kanagawa, 258-8577 (JP)**
• **KAMIDE, Yoshiyuki
No. 577, Ushijima, Kaisei-machi, Ashigarakami-gun,
Kanagawa, 258-8577 (JP)**
• **MOCHIZUKI, Yusuke
No. 577, Ushijima, Kaisei-machi, Ashigarakami-gun,
Kanagawa, 258-8577 (JP)**
• **AONO, Naruhiko
No. 577, Ushijima, Kaisei-machi, Ashigarakami-gun,
Kanagawa, 258-8577 (JP)**

(74) Representative: **HGF
HGF Limited
1 City Walk
Leeds LS11 9DX (GB)**

(56) References cited:
**WO-A1-2023/074879     JP-A- 2022 160 947
JP-B2- H0 611 219**

**EP 4 520 185 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Filed

The present disclosure relates to a method of producing a protein food material, a protein food material, and a molded meat alternative.

Related Art

Livestock meat is a food material widely consumed in the world. However, from the viewpoint of health maintenance, attempts have been made to refrain from intake of livestock meat and to intake a livestock meat substitute using a vegetable protein derived from a plant such as soybean as a raw material. Accordingly, various processing techniques have been proposed for obtaining a livestock meat substitute by using a protein raw material as a substitute for the livestock meat.

For example, Japanese Patent Application Laid-Open (JP-A) No. H1-23856 proposes a method of producing a protein food material from a protein-containing mixture containing an oilseed protein, a wheat gluten, and water by using an extruder having two screws and cooling of a discharge die provided at the tip of the extruder. Japanese Patent Application Laid-Open (JP-A) No. 2020-235 proposes use of a system for producing an extruded protein product, the system including a die including a flow path having a cross section that is a continuous loop along at least a part of a length of the die. JP2022160947A discloses a method for producing a meat-like food that does not contain meat, using an extruder, kneading a raw material containing protein with water while heating, and extruding the resulting kneaded product while forcibly cooling it.

SUMMARY

A livestock meat substitute tends to be required to have a fibrous texture imitating livestock meat and a chewy texture.

A livestock meat substitute having a "fibrous texture imitating livestock meat" means that the livestock meat substitute has a fibrous structure similar to muscle fibers of the livestock meat.

A "chewy texture" of the livestock meat substitute means that microvoids are provided inside, and that there is a sensation of elasticity similar to meat when the livestock meat substitute is bitten.

An embodiment of the disclosure provides a method of producing a protein food material having a fibrous texture imitating livestock meat and a chewy texture, a protein food material, and a molded meat alternative.

The disclosure includes the following embodiments.

[1] A method of producing a protein food material, the method including kneading a protein-containing mixture containing a vegetable protein and water by pressurizing and heating the protein-containing mixture in an extrusion section of a twin screw extruder; and after kneading, extruding the kneaded protein-containing mixture at a temperature of from 150°C to lower than 180°C in an outlet of the extrusion section while swelling the kneaded protein-containing mixture inside a discharge die mounted at a downstream end of the extrusion section in an extrusion direction.

[2] The method according to [1], in which a temperature drop rate from the outlet of the extrusion section to an outlet of the discharge die is 0.2 °C/mm or less, and a temperature of the protein-containing mixture at the outlet of the discharge die is from 95°C to 130°C.

[3] The method according to [1] or [2], in which a pressure drop maximum rate from the outlet of the extrusion section to an outlet of the discharge die is 0.02 MPa/mm or more.

[4] The method according to any one of [1] to [3], in which a pressure at a position located 10 mm upstream from an outlet of the discharge die in the extrusion direction is 1.0 MPa or less.

[5] The method according to any one of [1] to [4], in which a length of the discharge die in the extrusion direction is 200 mm or more.

[6] The method according to any one of [1] to [5], in which a value obtained by dividing a length of the discharge die in the extrusion direction by a lip clearance of the discharge die is 40 or more

[7] The method according to any one of [1] to [6], in which a temperature of the protein-containing mixture at a swelling start point inside the discharge die is from 120°C to 140°C.

[8] The method according to [7], in which the temperature of the protein-containing mixture at the swelling start point is from 125°C to 135°C.

[9] The method according to any one of [1] to [8], in which an apparent viscosity of the protein-containing mixture at a swelling start point inside the discharge die is from 1 Pa·s to 5,000 Pa·s.

[10] The method according to [9], in which the apparent viscosity of the protein-containing mixture at the swelling start point inside the discharge die is from 1 Pas to 1,000 Pa·s.

[11] The method according to any one of [1] to [10], in which a position at which the protein-containing mixture begins to be swollen inside the discharge die is a position located 10 mm or more upstream from an outlet of the discharge die in the extrusion direction.

[12] The method according to any one of [1] to [11], in which the discharge die has a temperature control mechanism.

[13] The method according to any one of [1] to [12], in which a pressure reduction mechanism is provided inside the discharge die.

[14] The method according to [13], in which the pressure reduction mechanism is an uneven shape provided inside the discharge die.

[15] The method of producing a protein food material according to any one of [1] to [14], in which the vegetable protein is at least one selected from the group consisting of a defatted soybean protein and a wheat gluten.

[16] The method according to any one of [1] to [15], in which the protein-containing mixture further contains a colorant.

[17] A protein food material containing a vegetable protein, the protein food material having a fibrous region in at least a part thereof and a porous structure, in which a percentage of a number of voids having a cross-sectional area of 0.1 $mm^2$ or less in a cross section parallel to a direction orthogonal to a fiber direction is 50% or more with respect to a number of all voids present in the cross section, and an average thickness of a wall separating the voids from each other is 200 $\mu$m or less.

[18] The protein food material according to [17], in which the number of voids per cross-sectional area is 0.5 number/$mm^2$ or more in the cross section parallel to the direction orthogonal to the fiber direction.

[19] The protein food material according to [17] or [18], in which an average value of ratios of a length of a major axis to a length of a minor axis of the voids present in a cross section parallel to the fiber direction of the protein food material is 2 or more.

[20] The protein food material according to any one of [17] to [19], in which an average value of angles at which major axes of the voids intersect with each other is 30° or less in a cross section parallel to the fiber direction.

[21] The protein food material according to any one of [17] to [20], in which a degree of orientation XA/XB satisfies $1.005 \leq XA/XB$, in which in an infrared absorption spectrum obtained by measuring the fibrous region by a polarized infrared total reflection absorption measurement method, $X_A$ is an intensity ratio of a peak intensity of an amide I band to a peak intensity of an amide II band measured by irradiating the fibrous region with polarized light parallel to the fiber direction of the fibrous region, and $X_B$ is an intensity ratio of a peak intensity of an amide I band to a peak intensity of an amide II band measured by irradiating the fibrous region with polarized light perpendicular to the fiber direction of the fibrous region.

[22] The protein food material according to any one of [17] to [21], in which, regarding the percentage of the number of voids having a cross-sectional area of 0.1 $mm^2$ or less in the cross section parallel to the direction orthogonal to the fiber direction, a standard deviation of a value when measured at ten points respectively separated by 30 cm along a longitudinal direction of the fiber direction is 20% or less, and a standard deviation of a value when measured at three points respectively separated by 1.5 cm along a width direction is 20% or less.

[23] A molded meat alternative, containing the protein food material according to any one of [17] to [22].

An embodiment of the disclosure can provide a method of producing a protein food material having a fibrous texture imitating livestock meat and a chewy texture, a protein food material, and a molded meat alternative.

BRIEF DESCRIPTION OF THE DRAWINGS

Fig. 1 is a schematic cross-sectional view illustrating an example of a twin screw extruder.
Fig. 2A is a schematic cross-sectional view illustrating an example of a flat discharge die.
Fig. 2B is a cross-sectional view taken along line a-a in Fig. 2A.
Fig. 2C is a schematic cross-sectional view illustrating an example of a cylindrical discharge die.
Fig. 2D is a cross-sectional view taken along line b-b in Fig. 2C.
Fig. 3 is a view illustrating a correspondence relationship between a graph showing an example of a temperature and pressure profile inside a discharge die and a schematic view of a swelling occurrence state.
Fig. 4A is a schematic cross-sectional view of a discharge die having a pressure reduction mechanism.
Fig. 4B is a cross-sectional view taken along line c-c in Fig. 4A.
Fig. 4C is a cross-sectional view taken along line d-d in Fig. 4A.

DETAILED DESCRIPTION

Hereinafter, embodiments that are examples according to the disclosure will be described. These descriptions and examples illustrate embodiments and do not limit the scope of the invention.

With regard to the stepwise numerical ranges described herein, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

Each component may contain a plurality of corresponding substances.

In a case in which a plurality of substances corresponding to each component are present in a composition, unless otherwise specified, the amount of each component in the composition means the total amount of the plurality of substances present in the composition.

The term "step" includes not only an independent step, but also a step that can achieve a predetermined action of the step even in the case of being not clearly distinguished from other steps.

Herein, a combination of two or more preferred aspects is a more preferred aspect.

<Method of Producing Protein Food Material>

A method of producing a protein food material according to the disclosure (hereinafter, also simply referred to as "production method according to the disclosure") includes kneading a protein-containing mixture containing a vegetable protein and water by pressurizing and heating the protein-containing mixture in an extrusion section of a twin screw extruder; and after kneading, extruding the kneaded protein-containing mixture at a temperature of from 150°C to lower than 180°C in an outlet of the extrusion section while swelling the kneaded protein-containing mixture inside a discharge die mounted at a downstream end of the extrusion section in an extrusion direction (hereinafter, also referred to as "extrusion step").

A protein food material according to the disclosure described below is an aspect of a protein food material produced by the production method according to the disclosure.

The protein food material produced by the production method according to the disclosure and the protein food material according to the disclosure have a fibrous texture imitating livestock meat and a chewy texture. The reason is presumed as follows.

The present inventors have found that the fibrous texture imitating livestock meat and the chewy texture are contributed by the fact that the protein food material has a fibrous structure like muscle fibers of the livestock meat and a large number of microvoids are oriented in a fiber direction.

Based on the above-described findings, the present inventors have found that it is possible to obtain a protein food material that has a fibrous structure similar to muscle fibers of livestock meat and a large number of microvoids oriented in a fiber direction by swelling the protein-containing mixture adjusted to a predetermined temperature range inside the discharge die in the extrusion step. More specifically, the temperature of the protein-containing mixture at the outlet of the extrusion section is set to from 150°C to lower than 180°C, a temperature drop profile of the protein-containing mixture inside the discharge die is controlled (that is, slowly cooled), the pressure inside the discharge die is set to a saturated water vapor pressure or lower, and water inside the protein-containing mixture is vaporized, such that the protein-containing mixture is swollen inside the discharge die.

In the production method according to the disclosure, the protein-containing mixture is not swollen when being discharged from the outlet of the discharge die, but rather, the protein-containing mixture (preferably a protein-containing mixture having a relatively high viscosity) is continuously swollen in a closed space inside the discharge die. This makes it possible to miniaturize the voids formed by the swelling of the protein-containing mixture.

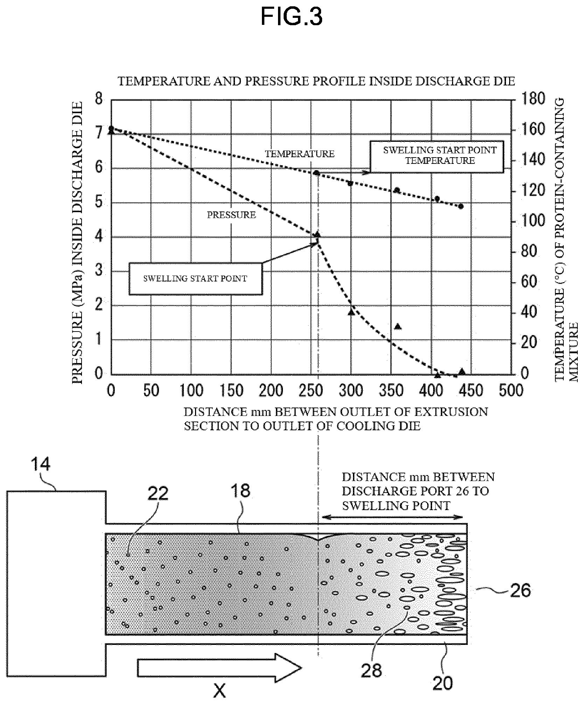

The reason that continuous swelling inside the discharge die enables miniaturization of voids is not clear, but it is thought that when the protein-containing mixture that is sufficiently softened at a high temperature (preferably 150°C or higher) to form a uniform mixture is slowly cooled while being extruded inside the discharge die, the protein-containing mixture is gradually solidified and heat-shrunk, and a local reduction in pressure and swelling are repeated. The slow cooling is preferably performed under conditions in which the temperature of the protein-containing mixture at the outlet of the discharge die is from 95°C to 130°C and the temperature drop rate is 0.2 °C/mm or less. As a result, it is presumed that fine and anisotropic voids are formed in the protein-containing mixture in cross-sectional view. This point will be specifically described below with reference to Fig. 3.

The fine and anisotropic voids formed by the production method according to the disclosure realize a protein food material having a fibrous texture imitating livestock meat and a chewy texture.

When the protein-containing mixture is swollen inside the discharge die, it is preferable to control a temperature of a swelling start point, an apparent viscosity of the protein-containing mixture, and/or a position where the protein-containing mixture is swollen within a certain range. In an aspect, the temperature of the protein-containing mixture at the swelling start point is controlled to from 120°C to 135°C and/or the position where the protein-containing mixture is swollen is controlled to be located 10 mm or more upstream from the outlet of the discharge die in the extrusion direction, such that more dense and anisotropic voids can be formed.

The position where the protein-containing mixture is swollen inside the discharge die is controlled to be 10 mm or more on the upstream side in the extrusion direction by temperature control, such that the void orientation can be more suitably imparted to the protein food material by rubbing (that is, application of a shear force) between the protein-containing mixture and the wall surface of the discharge die.

As a method of producing an alternative livestock meat, as described in JP-A No. H1-23856 and JP-A No. 2020-235, a method of discharging a pressurized and heated protein-containing mixture using an extruder or the like and fiberizing (that is, orienting) the mixture is known. However, any of the techniques described in JP-A No. H1-23856 and JP-A No. 2020-235 cannot produce a protein food material having a fibrous texture imitating a livestock meat and a chewy texture.

In the technique described in JP-A No. H1-23856, a base attached to a twin screw extruder is cooled to suppress swelling (porosity) of a protein-containing mixture and produce a protein food material having a dense texture, thereby obtaining a meat texture. However, JP-A No. H1-23856 does not describe that the protein-containing mixture is swollen inside the discharge die. It is also presumed that under the conditions described in Examples of JP-A No. H1-23856, slow cooling for swelling the protein-containing mixture inside the discharge die cannot be performed.

The technique described in JP-A No. 2020-235 discloses that a protein product having oriented fibers can be produced from a proteinaceous composition at a high speed using a cylindrical discharge die having a long flow path. However, JP-A No. 2020-235 does not describe swelling of the proteinaceous composition, and does not describe swelling of the proteinaceous composition inside the discharge die. In the technique described in Examples of JP-A No. 2020-235, it is presumed that the proteinaceous composition is not swollen.

Hereinafter, each step included in the production method according to the disclosure will be described.

[Extrusion Step]

The extrusion step is a step of kneading a protein-containing mixture containing a vegetable protein and water by pressurizing and heating the protein-containing mixture in an extrusion section of a twin screw extruder; and after kneading, extruding the kneaded protein-containing mixture at a temperature of from 150°C to lower than 180°C in an outlet of the extrusion section while swelling the kneaded protein-containing mixture inside a discharge die connected to a downstream end of the extrusion section in an extrusion direction.

The extruder used in the extrusion step is a twin screw extruder, and for example, a non-intermeshing counter-rotating twin screw extruder, an intermeshing counter-rotating twin screw extruder, and an intermeshing co-counter rotating twin screw extruder can be used.

Hereinafter, the extrusion step will be described with appropriate reference to the drawings. Note that each element in the drawings is not necessarily shown in terms of the accurate scale, and some parts may be shown emphasized since it is the main purpose to clearly show the principle of the disclosure. Components denoted by the same reference signs in each of the drawings mean the same components. The description of the components and reference signs overlapping in each of the drawings may be omitted.

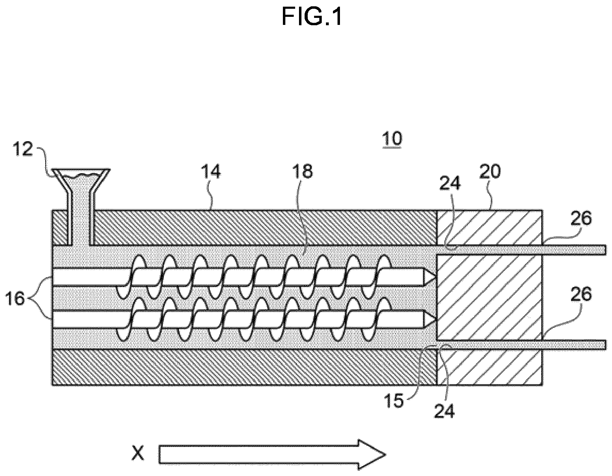

Fig. 1 is a schematic cross-sectional view illustrating an example of a twin screw extruder.

As illustrated in Fig. 1, in the extrusion step, a vegetable protein, which is a raw material of the protein food material, and water are charged into a twin screw extruder 10 from a hopper 12 (raw material supply section).

It is preferable that the raw material of the protein food material contains water in an amount of from 1 part by mass to 5 parts by mass with respect to 10 parts by mass of the raw material containing a vegetable protein. The "raw material containing a vegetable protein" may be a vegetable protein itself or a complex containing a vegetable protein and other components. It is also preferable that the raw material further contains a colorant. Examples of the complex of a vegetable protein and other components include a defatted soybean powder which is a complex containing a protein, a carbohydrate, and a fiber.

The charged raw material is kneaded by heating an extrusion section 14 and rotating two screws 16 included in the extrusion section 14 in the twin screw extruder 10 to form a protein-containing mixture 18, and the protein-containing mixture 18 is extruded in an extrusion direction X.

A temperature of the protein-containing mixture in the extrusion section 14 is preferably from 40°C to 180°C.

Specifically, on the upstream side of the center of the extrusion section 14 in the extrusion direction (that is, a portion from the raw material supply section to the center of the extrusion section), the temperature of the protein-containing mixture is preferably from 40°C to 150°C.

At the center of the extrusion section 14 in the extrusion direction (that is, the center of an axial length of the extrusion section 14), the temperature of the protein-containing mixture is preferably from 130°C to 180°C.

On the downstream side of the center of the extrusion section 14 in the extrusion direction (that is, a portion from the center of the axial length of the extrusion section 14 to the outlet of the extrusion section 14), the temperature of the protein-containing mixture is from 150°C to lower than 180°C and preferably from 150°C to 170°C. That is, the temperature of the protein-containing mixture at the outlet of the extrusion section 14 is from 150°C to lower than 180°C, and is preferably from 150°C to 170°C.

In a case in which the temperature of the protein-containing mixture is in the above range, the protein-containing mixture can be sufficiently softened and a uniform mixture can be obtained in the extrusion section 14.

The temperature of the protein-containing mixture in the extrusion section 14 can be measured using a temperature and pressure gauge (for example, "CZ-200P-HB-SNN-050P*NNN-K0100" manufactured by RKC INSTRUMENT INC.) installed in the extrusion section 14.

In the twin screw extruder 10, a discharge die 20 is mounted at the downstream end of the extrusion section 14 in the extrusion direction.

As illustrated in Fig. 1, the discharge die 20 includes a slit-shaped discharge flow path 24 provided in communication with the inside of the extrusion section 14, and the protein-containing mixture 18 passes through the outlet 15 of the extrusion section 14, flows through the flow path 24, and is discharged from a discharge port 26 that is an outlet of the discharge die 20. The shape of the discharge die is not particularly limited, and is preferably a flat shape or a cylindrical shape.

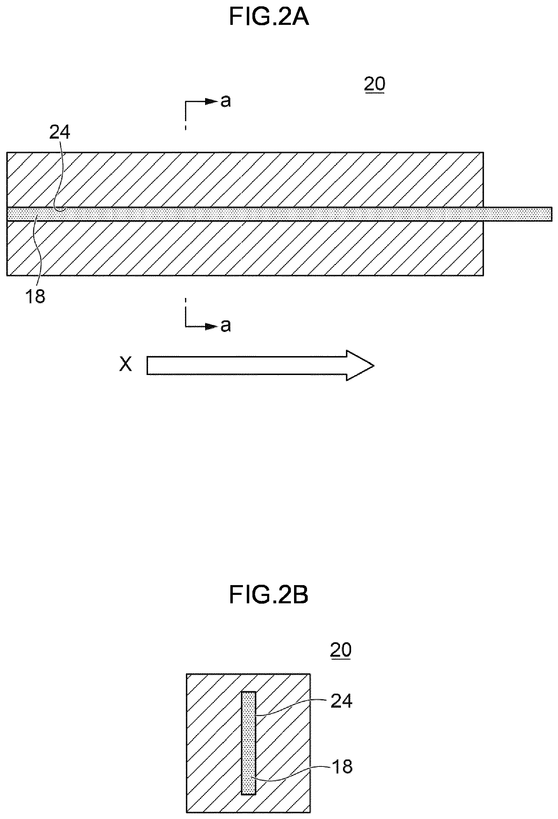

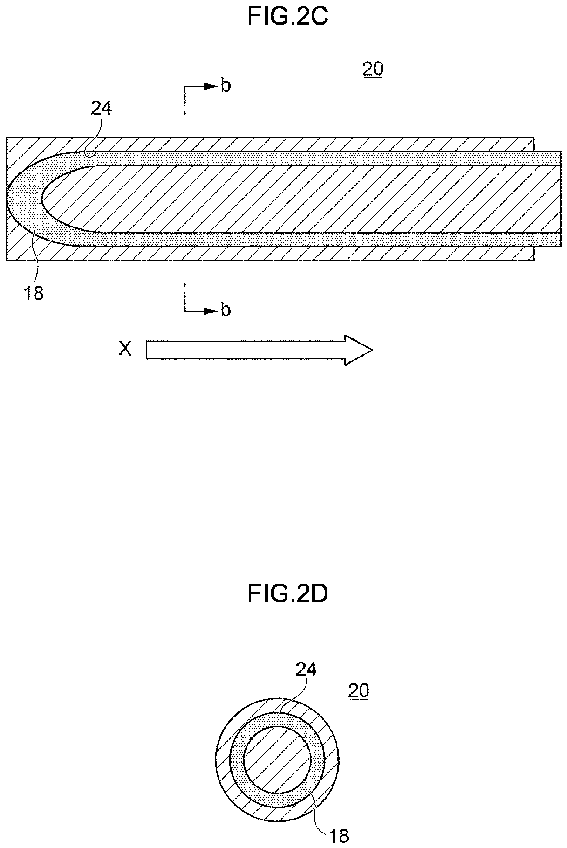

Fig. 2A is a schematic cross-sectional view illustrating an example of a flat discharge die, and Fig. 2B is a cross-sectional view taken along line a-a in Fig. 2A. The discharge die 20 illustrated in Fig. 2A is mounted at the upstream end of the extrusion section (not illustrated) in an extrusion direction X, and the protein-containing mixture 18 is swollen when being extruded through a flat discharge flow path 24 in the extrusion direction X.

Fig. 2C is a schematic cross-sectional view illustrating an example of a cylindrical discharge die. The discharge die 20 illustrated in Fig. 2C is mounted at the upstream end of the extrusion section (not illustrated) in an extrusion direction X, and the protein-containing mixture 18 is swollen when being extruded through a cylindrical discharge flow path 24 in the extrusion direction X.

The discharge die can be mounted on the extrusion section using any adapter.

A gap (lip clearance) of the discharge port 26 of the discharge die 20 is preferably from 1 mm to 10 mm, and more preferably from 1 mm to 5 mm. The gap (lip clearance) of the discharge port refers to the shortest length at the discharge port.

A length of the discharge die 20 along the extrusion direction X is preferably from 150 mm to 1,000 mm, and more preferably from 200 mm to 650 mm, from the viewpoint of controlling a temperature profile inside the discharge die and obtaining a protein food material having an excellent fibrous texture imitating livestock meat and an excellent chewy texture.

A ratio (length/lip clearance) of the length of the discharge die 20 in the extrusion direction X to the gap (lip clearance) of the discharge port is preferably 15 or more, and more preferably 40 or more. An upper limit value of the ratio is preferably 1,000.

It is preferable that the discharge die 20 has a temperature control mechanism. The temperature profile inside the discharge die is easily controlled by using a discharge die having a temperature control mechanism. That is, a position of a swelling point inside the discharge die, the temperature of the protein-containing mixture at the time of swelling, and the like are easily controlled.

Examples of the temperature control mechanism include a mechanism having a jacket for circulating a medium (a medium such as water, a glycol, or air) whose temperature is controlled in a peripheral portion of the discharge die, and a mechanism capable of adjusting the lip clearance of the discharge die.

In order to control the temperature stepwise from an inlet (that is, a connection portion of the extrusion section 14) of the discharge die to the outlet (that is, the discharge port 26) of the discharge die, it is further preferable that the discharge die has a plurality of temperature control mechanisms.

The protein-containing mixture 18 kneaded by heating and pressurization inside the extrusion section 14 is temperature-controlled when passing through the discharge die 20, and is discharged from the discharge port 26 of the discharge die 20.

The swelling of the protein-containing mixture inside the discharge die will be described.

As illustrated in Fig. 1, the protein-containing mixture 18 extruded from the inside of the extrusion section 14 to the discharge die 20 is sufficiently softened by a shear stress due to heat and kneading, and thus has fluidity. The protein-containing mixture 18 is rubbed by being brought into contact with an inner wall of the discharge flow path 24 at the downstream in the extrusion direction X inside the discharge die 20, and receives a shear stress, such that the protein is oriented and becomes fibrous while passing through the inside of the discharge die 20.

A temperature drop rate of the protein-containing mixture from the outlet of the extrusion section 14 to the discharge port of the discharge die 20 is 0.2 °C/mm or less, and a temperature of the protein-containing mixture 18 at the discharge port 26 of the discharge die 20 is preferably from 95°C to 130°C. The temperature of the protein-containing mixture 18 is more preferably from 95°C to 120°C, and still more preferably from 95°C to 110°C. The temperature drop rate of the protein-containing mixture 18 is 0.2 °C/mm or less and the temperature of the protein-containing mixture 18 at the discharge port 26 is controlled to fall within the above range, such that when the protein-containing mixture 18 is swollen, voids having a small size (for example, voids having a cross-sectional area of 0.1 mm$^2$ or less in a direction perpendicular to the fiber direction) are likely to be generated.

The reason for this is not clear, but it is presumed that in a process in which the protein-containing mixture softened to a uniform state at a high temperature (that is, the temperature is from 150°C to lower than 180°C at the outlet of the extrusion section) is slowly cooled to from 130°C to 95°C, as the protein-containing mixture is gradually solidified and thermally shrunk at around 130°C, a portion having a saturated water vapor pressure or lower is locally generated inside the discharge die, and water contained in the protein-containing mixture is vaporized (swollen).

It is presumed that microvoids form a dense porous structure (for example, in a cross section parallel to a direction orthogonal to the fiber direction, a percentage of the number of voids having a cross-sectional area of 0.1 mm$^2$ or less to the number of all voids present in the cross section is 50% or more) by setting the temperature drop rate of the protein-containing mixture to 0.2 °C/mm or less and continuously repeating a gradual local reduction in pressure and swelling. The small and dense voids in the porous structure are correlated with the fibrous texture imitating livestock meat and the chewy texture.

The size of the void formed by swelling of the protein-containing mixture depends greatly on the temperature and the apparent viscosity of the protein-containing mixture at the time of swelling. From such a viewpoint, in the production method according to the disclosure, the temperature of the protein-containing mixture at the swelling start point inside the discharge die is preferably from 120°C to 140°C, and more preferably from 125°C to 135°C.

The apparent viscosity of the protein-containing mixture at the swelling start point inside the discharge die is preferably from 1 Pa s to 5,000 Pa s, and more preferably from 1 Pa·s to 1,000 Pa·s. When the apparent viscosity of the protein-containing mixture at the time of swelling is 1 Pa·s or more (that is, the fluidity is not too high), the size of the void tends not to be excessively large. When the apparent viscosity of the protein-containing mixture at the time of swelling is 5,000 Pa·s or less (that is, the fluidity of the protein-containing mixture at the time of swelling is not too low), the voids are preferably formed and the size of the void tends not to be small.

In the disclosure, the apparent viscosity is a numerical value calculated from the following equation by measuring a pressure (ΔP) between two points inside the discharge die assuming that the protein-containing mixture is an incompressible Newtonian fluid.

$$\text{Apparent viscosity } (\eta) = \Delta P \cdot WH^{-3}/12QL$$

W: width of discharge die, H: lip clearance of discharge die, L: length of discharge die

The position where the protein-containing mixture 18 begins to be swollen inside the discharge die 20 is preferably located 10 mm or more upstream from the outlet (the discharge port 26) of the discharge die 20 in the extrusion direction X. Orientation of the swollen voids largely depends on where the swelling occurs in a longitudinal direction of the discharge die. Therefore, the position where the protein-containing mixture 18 begins to be swollen is set to be located 10 mm or more upstream from the outlet (the discharge port 26) of the discharge die 20 in the extrusion direction X, such that the voids are stretched in the longitudinal direction of the discharge die by rubbing a wall surface of the discharge die and the protein-containing mixture 18 (that is, applying a shear force), thereby obtaining orientation of the voids.

The swelling point indicates a position where the pressure inside the die locally becomes equal to or lower than the saturated water vapor pressure due to local solidification and shrinkage of the protein-containing mixture inside the discharge die and the protein-containing mixture is swollen (water inside the protein-containing mixture is evaporated). Once the swelling begins, a local "reduction in pressure swelling" continuously occurs. In the disclosure, the position where the swelling first occurs is referred to as a swelling start point.

The local reduction in pressure cannot be measured directly. Therefore, in the disclosure, a point at which a bulk pressure inside the discharge die measured by a temperature and pressure gauge ("CZ-200P-HB-SNN-050P*NNN-K0100" manufactured by RKC INSTRUMENT INC.) installed at intervals of about 50 mm in the longitudinal direction of the discharge die starts to be sharply reduced is defined as a swelling start point.

A pressure drop maximum rate from the outlet 15 of the extrusion section 14 to the discharge port 26 of the discharge die 20 is preferably 0.02 MPa/mm or more, and more preferably 0.04 MPa/mm or more. An upper limit value of the pressure drop maximum rate is preferably, for example, 0.1 MPa/mm or less.

Fig. 3 is a view illustrating a correspondence relationship between a graph showing an example of a temperature and pressure profile inside a discharge die and a schematic view of a swelling occurrence state. In the graph shown in the upper part of Fig. 3, Example 1 described below is used as an example.

In an example illustrated in Fig. 3, it is observed that a bulk pressure inside the discharge die is sharply reduced at a position in the vicinity of 250 mm between the outlet of the extrusion section 14 to the outlet (discharge port 26) of the discharge die 20, and this position is defined as a swelling start point. In Fig. 3, the reference numeral 22 schematically indicates a water nucleus contained in the protein-containing mixture 18, and the reference numeral 28 schematically indicates a void formed by swelling. It is presumed that once the protein-containing mixture 18 moves inside the discharge die 20 in the extrusion direction X and starts to be swollen at the swelling start point, swelling occurs continuously until the bulk pressure is completely reduced to the saturated water vapor pressure or lower or the temperature of the protein-containing mixture is 100°C or lower.

The pressure at the position located 10 mm upstream from the discharge port 26 of the discharge die 20 in the extrusion direction X is preferably 1.0 MPa or less, and more preferably 0.1 MPa or less. At the time of discharge from the discharge port 26 of the discharge die 20, since the pressure inside the discharge die 20 is reduced to the saturated water vapor pressure or lower, when the protein-containing mixture passes through the discharge die 20 and is discharged into an open space, undesired swelling does not occur, formation of voids having a large size is suppressed, and a chewy texture is easily obtained.

It is preferable that a pressure reduction mechanism is provided inside the discharge die. An installation mode of the pressure reduction mechanism is not particularly limited, and the pressure reduction mechanism may be continuously installed from the inlet of the discharge die to the outlet (discharge port), or may be installed at regular intervals. Examples of the pressure reduction mechanism include increasing clearances at regular intervals inside the discharge die and providing an uneven shape on an inner wall of the discharge die. From the viewpoint of stabilizing the position of the swelling point, it is more preferable to provide an uneven shape on the inner wall of the region extending from the position at which the swelling of the protein-containing mixture is desired to start to the discharge port inside the discharge die, as a pressure reduction mechanism.

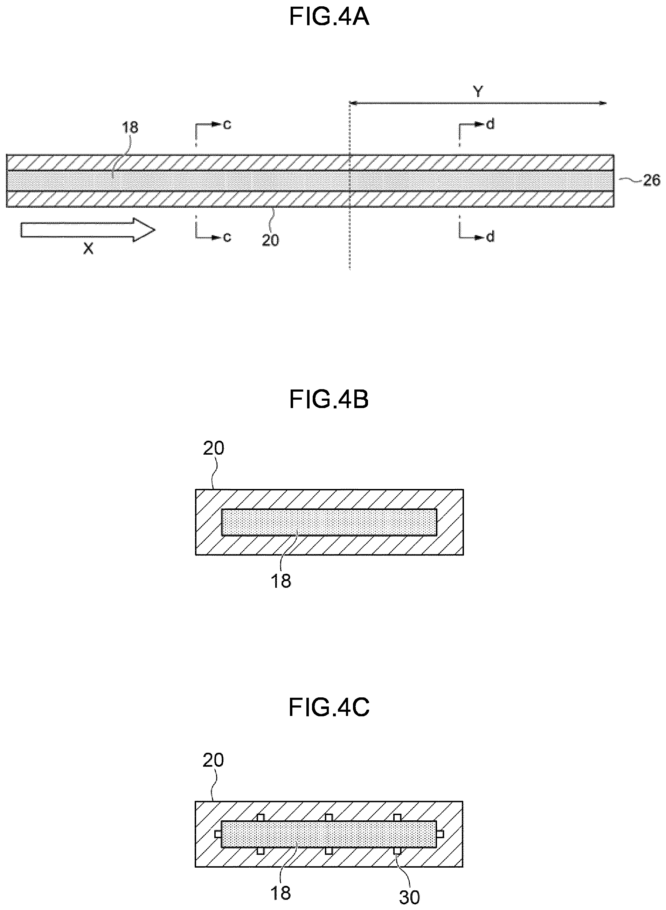

Fig. 4A is a schematic cross-sectional view illustrating an example of the discharge die 20 provided with a pressure reduction mechanism, Fig. 4B is a cross-sectional view taken along line c-c in Fig. 4A, and Fig. 4C is a cross-sectional view taken along line d-d in Fig. 4A. In Figs. 4A to 4C, a pressure reduction mechanism 30 having an uneven shape is provided in a region having a distance Y from the discharge port 26 of the discharge die 20 to the swelling start point of the protein-containing mixture 18. The pressure reduction mechanism 30 includes eight recesses provided at predetermined intervals along the extrusion direction X on the inner wall of the discharge die 20.

A discharge amount of the protein-containing mixture 18 is preferably from 10 kg/hr to 100 kg/hr, and is more preferably from 20 kg/hr to 80 kg/hr, from the viewpoint of obtaining a protein food material having an excellent fibrous texture imitating livestock meat.

Next, components used as raw materials of the protein food material, such as a vegetable protein and a colorant, will be described.

-Vegetable Protein-

In the production method according to the disclosure, a vegetable protein is used as a raw material. That is, the protein food material according to the disclosure contains a vegetable protein.

The vegetable protein is a protein collected from a plant.

The vegetable protein is not particularly limited as long as the vegetable protein is a protein collected from a plant. Examples of the origin of the vegetable protein include cereals such as wheat, barley, oats, rice, and corn; beans such as soybean, pea, red bean, chickpea, lentil, broad bean, mung bean, and lupin bean; seeds such as almond, peanut, cashew nut, pistachio, hazelnut, macadamia nut, linseed, sesame, rapeseed, cottonseed, safflower, and sunflower; potatoes such as potato, sweet potato, yam, artichoke, and cassava; vegetables such as asparagus, artichoke, cauliflower, broccoli, and green soybean; fruits such as banana, jack fruit, kiwi fruit, coconut, avocado, and olive; mushrooms such as mushroom, Eryngii mushroom, shiitake mushroom, shimeji mushroom, and maitake mushroom; and algae such as chlorella, spirulina, euglena, laver, kelp, seaweed, agar, hijiki, and mozuku.

Among them, the origin of the vegetable protein is preferably at least one selected from the group consisting of wheat, soybean, pea, and rice, and is more preferably at least one selected from the group consisting of soybean and wheat, from the viewpoint of obtaining a chunk meat-like molded meat alternative having an appearance and texture similar to those of actual livestock meat. As the vegetable protein, at least one selected from the group consisting of a defatted soybean protein and a wheat gluten is particularly preferable.

In the disclosure, the "chunk meat" refers to uncooked raw livestock meat cut out from livestock for meat into an arbitrary size or livestock meat obtained by cooking the raw livestock meat, and also refers to livestock meat that is not ground or chopped after being cut out from livestock.

The vegetable protein may contain one kind of vegetable protein, or may contain two or more kinds of vegetable proteins. In a case in which two or more kinds of vegetable proteins are used, the kind and blending ratio thereof can be appropriately determined.

For example, in a case in which a defatted soybean containing a defatted soybean protein and a wheat gluten are used as raw materials containing a vegetable protein, a mass ratio of the defatted soybean to the wheat gluten is preferably from 80:20 to 60:40, from the viewpoint of obtaining an excellent meat appearance.

A content of the protein is preferably from 5% by mass to 80% by mass, more preferably from 7% by mass to 70% by mass, and still more preferably from 10% by mass to 60% by mass, with respect to the entire protein food material.

-Water-

The production method according to the disclosure preferably uses water.
A content of the water in the protein-containing mixture is preferably from 20% by mass to 40% by mass with respect to the entire protein-containing mixture containing water.

-Colorant-

It is preferable that the protein food material according to the disclosure contains a colorant. In a case in which the protein food material contains a colorant, it is easy to obtain a color similar to the color of brown meat after heating.
The colorant is preferably an edible and brown colorant.
Examples of the colorant include a cacao pigment, a monascus pigment, and a plant carbon pigment, and among them, a cacao pigment is preferable.
The protein food material may contain only one kind of colorant, or may contain two or more kinds of colorants.
A content of the colorant contained in the protein food material is preferably from 0.01% by mass to 3% by mass, more preferably from 0.05% by mass to 2% by mass, and still more preferably from 0.1% by mass to 1% by mass, with respect to the entire protein food material.
The protein food material may contain other additives in addition to the protein and the colorant to be contained, if necessary. Examples of the other additives include a seasoning, an inorganic salt or an organic salt, a sugar, an oil and/or fat, a thickener, a plasticizer, a surfactant, and a flavor component. A content of the other additives can be set according to a purpose.
The mixture (that is, the protein food material) extruded in the extrusion step can be used as it is as an meat alternative without any special processing. That is, the extruded mixture (the protein food material) can be used as it is as a heated meat alternative. The mixture may be cooked with an arbitrary seasoning or the like in the state of the extruded mixture.
The extruded mixture can be subjected to a desired processing such as molding.

[Molding Step]

The production method according to the disclosure may include a molding step after the extrusion step.
The molding step may include cutting the extruded mixture (that is, the protein food material) into a shape according to a purpose. For example, the cut protein food material can be used as a meat alternative similar to thinly sliced meat. The cut protein food material may be cooked with any seasoning or the like.
The molding step may include processing the protein food material into a molded product having a shape according to a purpose.
For example, the protein food material is collected into a mass form and molded into a shape similar to a shape of a chunk meat, such that it is possible to produce a lean-like portion of a chunk meat-like molded meat alternative. From the viewpoint of obtaining a molded meat alternative having a texture close to that of a chunk meat, it is preferable that when raw materials of the extruded lean-like portion are collected into a mass form, extrusion directions of the raw materials of the extruded lean-like portion are aligned in directions close to the same direction.
Alternatively, after the protein food material is collected in a mass form, the extrusion directions of the raw materials in the protein food material may be aligned by a method of flattening the protein food material by applying a pressure, a method of passing the protein food material through a tubular space, or the like.

[Other Steps]

A method of producing the protein food material may include steps other than the extrusion step and the molding step described above. The other steps may be any step such as a drying step, a crushing step, or a packaging step.

(Protein Food Material)

The protein food material according to the disclosure has a fibrous region in at least a part thereof and a porous structure, a percentage of a number of voids having a cross-sectional area of $0.1 \text{ mm}^2$ or less in a cross section parallel to a direction orthogonal to a fiber direction is 50% or more with respect to a number of all voids present in the cross section, and an average thickness of a wall separating the voids from each other is 200 $\mu$m or less.

The expression "having a fibrous region in at least a part thereof" means that a region having streaky irregularities is present in at least a part of the protein food material.

The expression "having a porous structure" refers to having an isotropic or anisotropic porous structure. The anisotropic porous structure refers to a structure in which a pore shape appearing on a cut surface obtained by cutting a protein food material at an arbitrary position varies depending on a cutting direction. The isotropic porous structure refers to a structure in which a pore shape appearing on a cut surface obtained by cutting a protein food material at an arbitrary position is approximately the same regardless of a cutting direction. It is preferable that the protein food material according to the disclosure has an anisotropic porous structure.

Examples of a method of observing the cut surface include a method of cutting a section and observing the section with a microscope and a method of observing the section with X-ray computed tomography (CT).

(Number Percentage of Voids)

In the protein food material of the disclosure, a percentage of a number of voids (number percentage of voids) having a cross-sectional area of 0.1 mm$^2$ or less in a cross section parallel to a direction orthogonal to a fiber direction is 50% or more, more preferably 60% or more, and still more preferably 70% or more, with respect to a number of all voids present in the cross section. An upper limit value of the number percentage of voids is not particularly limited, and is preferably 90% from the viewpoint of a juicy texture of the molded meat alternative. When the number percentage of voids is 50% or more, the molded meat alternative has an excellent fibrous texture in the cross section.

The number percentage of voids is calculated by the following method.

The protein food material that is frozen and stored at -20°C is thawed by allowing the protein food material to stand in an environment of room temperature (23°C) and a relative humidity of 20%RH.

After a fiber direction is determined, the protein food material is cut parallel to a direction orthogonal to the fiber direction using a cutting unit to form a cut surface (cross section for measurement). As the cutting unit, a known cutting unit such as a knife or a single-edged razor may be used.

Using an optical microscope (product name: VHX-5000, manufactured by KEYENCE CORPORATION) equipped with a zoom lens (product name: VH-ZST, manufactured by KEYENCE CORPORATION), a cut surface (cross section for measurement) formed on a measurement sample is observed with an objective lens (product name: ZS-20, manufactured by KEYENCE CORPORATION) at a lens magnification of 30 times.

Voids present in the observed cut surface can be detected using commercially available software (MatLab, version 2018).

After in-plane unevenness of brightness is corrected, binarization is performed on the basis of brightness, and a dark part is extracted.

A labeling process and a morphological process are performed on a plurality of extracted dark regions, and morphological analysis of each dark region is performed. A dark region having a certain area or less (0.01 mm$^2$ or less) is defined as noise and removed, and a void adjacent to a boundary of the image is further removed. The size of the void is detected, and a cross-sectional area (mm$^2$) of each void is calculated.

Based on the obtained cross-sectional area, a percentage (%) of the number of voids having a cross-sectional area of 0.1 mm$^2$ or less to the total number of voids present in the cut surface is calculated.

The number percentage (%) of voids in the protein food material is a value obtained by determining the fiber direction of each of five measurement samples prepared from the protein food material to be measured by the above-described method, performing the above-described measurement on each measurement sample, calculating a number percentage (%) of voids, and then arithmetically averaging the obtained five number percentages (%).

The shape of the void containing the protein food material according to the disclosure is not particularly limited, and may be any one of a spherical shape, an ellipsoid shape, a cylindrical shape, and a disk shape. From the viewpoint of improving the fibrous texture of the cross section, it is preferable that the shape of the void has a cylindrical shape.

(Average Thickness of Wall Separating Voids From Each Other)

In the protein food material according to the disclosure, an average thickness of the wall separating the voids from each other is 200 μm or less, more preferably 150 μm or less, and still more preferably 100 μm. A lower limit value of the average thickness of the wall separating the voids from each other is not particularly limited, and is preferably 30 μm or more from the viewpoint of an elastic feeling of the fibers. When the average thickness of the wall separating the voids from each other is 200 μm or less, both meat-like elasticity and ease of chewing can be achieved.

The average thickness of the wall separating the voids from each other is calculated by the following method.

Voids in the cross section are detected in the same manner as in the calculation of the number percentage of voids. A minimum distance is obtained among distances from a point on the contour of one detected hole (void) to a point on the contour of another hole. A minimum distance average value is determined by selecting ten holes from the holes detected in one observation image, determining a minimum distance for each hole, and averaging the values of the ten holes.

The minimum distance average value is determined for a total of five observation images. The minimum distance average value obtained from each of the five observation images is averaged to determine an average thickness of the wall separating the voids from each other.

(Average Value of Aspect Ratios of Voids)

An average value of ratios (hereinafter, also referred to as "aspect ratio") of a length of a major axis to a length of a minor axis of the voids present in a cross section parallel to the fiber direction of the protein food material according to the disclosure is preferably 2 or more.

In the disclosure, the "fiber direction" means a longitudinal direction of fibers present in the fibrous region of the protein food material, and is determined by the following method.

In a case in which the protein food material to be measured has a size that can be torn by a tearing method (for example, hands), the "fiber direction" refers to a direction in which the protein food material is torn.

Specifically, an end of the protein food material to be measured is gripped, and the protein food material is torn in a tearing direction to obtain a measurement sample. The obtained measurement sample is viewed from above, two points separated by 5 mm on any one tearing line parallel to the tearing direction are randomly selected, and a direction of a straight line connecting the two points is defined as a fiber direction.

In a case in which it is impossible or difficult for the protein food material to be measured to be torn by the tearing method, the "fiber direction" is determined based on the longitudinal direction of the fiber present in the fibrous region on the surface of the protein food material. Specifically, a streaky protrusion present in the fibrous region on the surface of the protein food material to be measured is randomly selected, and a direction of a straight line along a longitudinal direction of the protrusion is defined as a fiber direction.

An average value of the aspect ratios of the voids is calculated by the following method.

The protein food material that is frozen and stored at -20°C is thawed by allowing the protein food material to stand in an environment of room temperature (23°C) and a relative humidity of 20%RH.

After the fiber direction is confirmed, an X-ray transmission image is acquired under conditions of a radiation source of Cu (40 kV/30 mA), a lens of L4320, and binning of 2 using a three-dimensional X-ray microscope (product name: "nano3DX", manufactured by Rigaku Corporation), and then a three-dimensional image is reconstructed.

A cross-sectional image obtained by enlarging an area region of 1.5 cm square included in a plane parallel to the fiber direction is taken out, and a dark part surrounded by a bright part is visually detected as a void. Ten voids are randomly selected. In a case in which ten voids are not present in the cross-sectional image, another cross-sectional image is taken out.

Among the points constituting the outline of the void, two points having the longest distance therebetween are selected, a line segment connecting the two points is defined as a major axis, and a length of the line segment is defined as a length of the major axis. A straight line extended to infinity in the longitudinal direction of both ends of the major axis is defined as a major axis line. Among straight line groups orthogonal to the major axis line, a straight line group having two or more intersections with the contour of the void is defined as a minor axis group. In the minor axis group, a straight line having the longest distance between the most distant intersections is selected as a minor axis line. A line segment connecting an intersection of the minor axis line and two points farthest from each other on the contour of the void is defined as a minor axis, and a length thereof is defined as a length of the minor axis of the void. The aspect ratio of the void is calculated using the following equation.

Aspect ratio of void = Length of major axis of void/Length of minor axis of void

Then, the aspect ratios of ten voids are averaged to determine an average value.

The average value of the aspect ratios of the voids is preferably 2 or more, more preferably 3 or more, still more preferably 4 or more, particularly preferably 6 or more, and most preferably 8 or more, from the viewpoint of improving the fibrous texture of the cross section of the protein food material. On the other hand, from the viewpoint of the texture of the protein food material, the average value of the aspect ratio of voids is preferably 80 or less, and more preferably 50 or less.

When the average value of the aspect ratios of the voids is 2 or more, the voids are easily torn in a certain direction, and have excellent processability into an meat alternative such as excellent absorption of a seasoning or the like.

(Average Value of Angles At Which Major Axes of Voids Intersect With Each Other and Standard Deviation)

In the cross section parallel to the fiber direction of the protein food material according to the disclosure, an average value of angles at which the major axes of the voids intersect with each other is preferably 30° or less, more preferably 26° or less, still more preferably 22° or less, and particularly preferably 17° or less. A lower limit value of the average value of the angles at which the major axes of the voids intersect with each other is not particularly limited, and is preferably 0.5° from the viewpoint of the fibrous texture. When the average value of the angles at which the major axes of the voids intersect with each other is 30° or less, the fibrous texture of the cross section of the molded meat alternative has excellent, and the chewy texture and the juicy texture are also excellent.

The average value of the angles at which the major axes of the voids intersect with each other is calculated by the following method.

Similarly to the method of calculating the average value of the aspect ratios of the voids, ten voids are randomly selected. For each selected void, a major axis is determined. A straight line extended to infinity in the longitudinal direction of both ends of the major axis is drawn. An arbitrary one of the ten straight lines is selected as a "reference line". An angle at which the reference line intersects with nine straight lines other than the reference line is measured. At this time, an angle from the reference line to the straight line other than the reference line in the counterclockwise direction is recorded. Note that in a case in which the reference line is parallel to the straight line other than the reference line, the angle is 0°. A straight line corresponding to the fifth smallest angle among the nine recorded angles is defined as a "center line".

Next, an angle at which the center line intersects with each of the nine straight lines other than the center line is measured. At this time, an angle of greater than 0° to 90° is recorded. Note that in a case in which the center line is parallel to the straight line other than the center line, the angle is 0°.

An average value of the recorded nine angles is adopted as an "average value of angles at which the major axes of the voids intersect with each other". A standard deviation of the nine angles is adopted as a "standard deviation of the angle at which the major axes of the voids intersect with each other".

(Number of Voids Per Cross-Sectional Area)

In the cross section parallel to the direction orthogonal to the fiber direction of the protein food material according to the disclosure, the number of holes per cross-sectional area is preferably 0.5 number/mm$^2$ or more, more preferably 0.9 number/mm$^2$ or more, and still more preferably 1.3 number/mm$^2$ or more. An upper limit value of the number of holes per cross-sectional area is not particularly limited, and is preferably 7.0 number/mm$^2$ or less from the viewpoint of the elastic feeling of the fibers. When the number of holes per cross-sectional area is 0.5 number/mm$^2$ or more, water retainability can be imparted to the protein fibers, and the juicy texture can be easily imparted to the molded meat alternative.

An area ratio of the voids is calculated by the following method.

The protein food material that is frozen and stored at -20°C is thawed by allowing the protein food material to stand in an environment of room temperature (23°C) and a relative humidity of 20%RH.

After a fiber direction is determined, the protein food material is cut parallel to a direction orthogonal to the fiber direction using a cutting unit to form a cut surface (cross section for measurement). As the cutting unit, a known cutting unit such as a knife or a single-edged razor may be used.

Using an optical microscope (product name: VHX-5000, manufactured by KEYENCE CORPORATION) equipped with a zoom lens (product name: VH-ZST, manufactured by KEYENCE CORPORATION), a cut surface (cross section for measurement) formed on a measurement sample is observed with an objective lens (product name: ZS-20, manufactured by KEYENCE CORPORATION) at a lens magnification of 30 times.

Voids present in the observed cut surface can be detected using commercially available software (MatLab, version 2018).

After in-plane unevenness of brightness is corrected, binarization is performed on the basis of brightness, and a dark part is extracted.

A labeling process and a morphological process are performed on a plurality of extracted dark regions, and morphological analysis of each dark region is performed. A dark region having a certain area or less (0.01 mm$^2$ or less) is defined as noise and removed, and a void adjacent to a boundary of the image is further removed.

The number of voids is detected, and a total number of voids is calculated. A total cross-sectional area (mm$^2$) of the protein food material is calculated. The total cross-sectional area of the protein food material includes an area of a solid part containing the protein and an area of the voids.

The number of holes per cross-sectional area is calculated using the following equation. Number of voids per cross-sectional area (number/mm$^2$) = (Total number of voids)/(Total cross-sectional area of protein food material)

The number of voids (number/mm$^2$) per cross-sectional area in the protein food material is a value obtained by determining the fiber direction of each of five measurement samples prepared from the protein food material to be measured by the above-described method, performing the above-described measurement on each measurement sample, calculating the number of voids (number/mm$^2$), and then arithmetically averaging the obtained number of five voids (number/mm$^2$).

(Degree of Orientation XA/XB in Fibrous Region)

It is preferable that in the protein food material according to the disclosure, a degree of orientation XA/XB satisfies 1.005 ≤ XA/XB, in which in an infrared absorption spectrum (hereinafter, also referred to as "IR spectrum") obtained by measuring the fibrous region by a polarized infrared total reflection absorption measurement method (hereinafter, also referred to as "polarized ATR-IR method"), XA is an intensity ratio of a peak intensity of an amide I band to a peak intensity of an amide II band measured by irradiating the fibrous region with polarized light parallel to the fiber direction of the fibrous region, and XB is an intensity ratio of a peak intensity of an amide I band to a peak intensity of an amide II band measured by irradiating the fibrous region with polarized light perpendicular to the fiber direction of the fibrous region.

In the disclosure, the fact that the degree of orientation XA/XB in the fibrous region satisfies 1.005 ≤ XA/XB means that the protein (that is, the protein fibers) included in the fibrous region is highly oriented.

Hereinafter, a method of measuring the degree of orientation XA/XB in the fibrous region of the protein food material will be described.

<Preparation of Measurement Sample>

The fibrous region on the surface of the protein food material to be measured is thinly scraped using a cutting unit (a razor or the like) to obtain a cut piece. In a case in which contamination is observed on the outermost surface, a surface exposed by scraping may be used for measurement. A thickness of the cut piece is from 100 μm to 5,000 μm. A size of the cut piece is set to be fit within a square having one side of from 0.5 cm to 3 cm. The obtained cut piece is used as a measurement sample.

<Measurement Apparatus and Measurement Conditions>

· Measurement apparatus
IR apparatus (Bertex 70, manufactured by Bruker Corporation) or equivalent apparatus
· Measurement conditions

Wavenumber range of from 650 cm$^{-1}$ to 4,000 cm$^{-1}$
ATR unit: Goldengate (Ge crystal, incident angle of 45°, single reflection) manufactured by Specac Ltd.
Measurement area: about 5 mmΦ, measurement depth: about 1 μm deep from measurement surface

<Measurement>

The measurement sample is fixed on a measurement table of the measurement apparatus so that a cut surface is an irradiation surface of irradiation light (s-polarized light), and measurement is performed. The measurement is performed as follows according to the measurement apparatus and the measurement conditions described above.

The sample for evaluation is irradiated with s-polarized light to obtain an IR spectrum in a case in which the incident s-polarized light and the fiber direction of the sample for evaluation are parallel. Next, the sample for evaluation is rotated by 90°, and an IR spectrum in a case in which the incident s-polarized light and the fiber direction of the sample for evaluation are perpendicular is measured.

From the obtained IR spectrum, a peak intensity of an amide I band and a peak intensity of an amide II band are specified in a case in which the incident s-polarized light and the fiber direction of the sample for evaluation are parallel.

Similarly, a peak intensity of an amide I band and a peak intensity of an amide II band are specified in a case in which the incident s-polarized light and the fiber direction of the sample for evaluation are perpendicular.

Note that the amide I band mainly shows C=O stretching vibration of a secondary amide, and the amide II band mainly shows N-H bending vibration and C-N stretching vibration of trans-type -CO-NH-. In the measurement in the disclosure, the peak of the amide II band is observed at from 1,590 cm$^{-1}$ to 1,700 cm$^{-1}$ and the peak of the amide II band is observed at from 1,490 cm$^{-1}$ to 1,590 cm$^{-1}$.

<Intensity Ratio XA, Intensity Ratio XB, and Degree of Orientation XA/XB>

The intensity ratio XA, the intensity ratio XB, and the degree of orientation XA/XB are calculated from the peak intensity obtained from the area of the amide I band and the peak intensity obtained from the area of the amide II band specified above.

The protein food material according to the disclosure satisfies 1.005 ≤ XA/XB, and more preferably 1.0745 ≤ XA/XB ≤ 1.102. An upper limit value of the degree of orientation XA/XB is, for example, 1.5.

The measurement is performed at three randomly selected points, and the obtained values are arithmetically averaged and rounded to the first decimal place to obtain a measured value.

It is preferable that the protein food material according to the disclosure has a surface appearance having many streaky irregularities on the surface.

(Standard Deviation of Number Percentage of Voids)

In the protein food material according to the disclosure, regarding the percentage of the number of voids having a cross-sectional area of 0.1 mm$^2$ or less in the cross section parallel to the direction orthogonal to the fiber direction, a standard deviation of a value when measured at ten points respectively separated by 30 cm along a longitudinal direction of the fiber direction (hereinafter, also referred to as "standard deviation A") is 20% or less, and a standard deviation of a value when measured at three points respectively separated by 1.5 cm along a width direction (hereinafter, also referred to as "standard deviation B") is 20% or less. The "fiber direction" corresponds to the "extrusion direction" when the protein food material is produced.

The standard deviation A is preferably 20% or less, more preferably 15% or less, and still more preferably 10% or less. A lower limit value of the standard deviation A is not particularly limited, and is preferably 2% or more from the viewpoint of obtaining a meat-like texture. When the standard deviation A is 20% or less, a structural variation of the protein food material is reduced, such that a yield can be improved and a variation in texture can be reduced.

The standard deviation B is preferably 20% or less, more preferably 15% or less, and still more preferably 10% or less. A lower limit value of the standard deviation B is not particularly limited, and is preferably 2% or more from the viewpoint of obtaining a meat-like texture. When the standard deviation B is 20% or less, a structural variation of the protein food material is reduced, such that a yield can be improved and a variation in texture can be reduced.

A standard deviation of the number percentage of voids is calculated by the following method.

The protein food material is cut to a length of 330 cm with the fiber direction (that is, the extrusion direction) as the longitudinal direction to obtain a sample.

In a case in which the discharge die used for the production of the protein food material has a cylindrical shape, a sample is obtained after being cut along the fiber direction (that is, the extrusion direction) from one point on the circumference of the cylindrical protein food material to form a sheet.

In a case in which the discharge die used for the production of the protein food material is a flat shape, the protein food material is used as it is to obtain a measurement sample since the protein food material has a sheet shape.

One surface of the sheet-like sample obtained as described above is marked with a point having the same position in the width direction, and is defined as a position A. A position distant from the position A by 1.5 cm in the width direction is defined as a position B, a position distant from the position B by 1.5 cm is defined as a position C, and a position distant from the position C by 1.5 cm is defined as a position D, and these positions are marked in the same manner.

For each 30 cm long in the fiber direction (extrusion direction) of the sheet-like sample, ten points are cut at positions orthogonal to the fiber direction to obtain ten cross sections.

For one cross section, using an optical microscope (product name: VHX-5000, manufactured by KEYENCE CORPORATION) equipped with a zoom lens (product name: VH-ZST, manufactured by KEYENCE CORPORATION), a cut surface (cross section for measurement) formed on a measurement sample is observed with an objective lens (product name: ZS-20, manufactured by KEYENCE CORPORATION) at a lens magnification of 30 times. Three points from the position A to the position B, from the position B to the position C, and from the position C to the position D are observed.

From each observation image, the number percentage of voids having a cross-sectional area of 0. 1 mm$^2$ or less is evaluated.

(Standard Deviation A: Standard Deviation of Percentage of Number of Voids in Longitudinal Direction)

For the percentage of the number of voids having a cross-sectional area of 0.1 mm$^2$ or less in the observation image from the position A to the position B, a standard deviation is calculated from ten values in the fiber direction (extrusion direction).

Similarly, the standard deviation is calculated for each of the observation images from the position B to the position C and from the position C to the position D.

Among the obtained standard deviations, a maximum value is taken as an evaluation value of the standard deviation A.

(Standard Deviation B: Standard Deviation of Percentage of Number of Voids in Width Direction)

A standard deviation is calculated from a value of a percentage of the number of voids having a cross-sectional area of 0.1 mm$^2$ or less each of from the position A to the position B, from the position B to the position C, and from the position C to the position D in one cross section. The standard deviation is similarly calculated for each of the remaining nine cross sections.

Among the obtained standard deviations, a maximum value is taken as an evaluation value of the standard deviation B.

(Use of Protein Food Material)

The protein food material according to the disclosure may be used as it is or as a mixture mixed with a desired additive component, or may be used as one of materials for producing a processed product such as a molded meat alternative.

In an aspect, the protein food material according to the disclosure is preferably a molded meat alternative containing the protein food material.

Examples of the additive component to be mixed with the protein food material when the molded meat alternative is produced include an oil and/or fat, a binder, an enzyme, and other additives.

-Oil and/or Fat-

The lean-like portion included in the livestock meat has a smaller content of an oil and/or fat than a fat-like portion, but may contain a certain amount of an oil and/or fat. Therefore, the protein food material and an oil and/or fat are combined, such that a state similar to the composition of the lean of the livestock meat is more likely to be obtained, and a texture closer to that of the livestock meat is more likely to be obtained.

The oil and/or fat is preferably a vegetable oil.

Since the vegetable oil is derived from a plant, it is easy to use the vegetable oil even when it is necessary to avoid or restrict the intake of animal-source food for reasons such as health, animal welfare, religion, allergy, and food crisis due to population increase.

A content of the oil and/or fat is preferably from 0% by mass to 50% by mass, more preferably from 1% by mass to 40% by mass, and still more preferably from 3% by mass to 30% by mass, with respect to the entire mixture of the protein food material and the oil and/or fat.

Unlike the fat-like portion in the livestock meat, the oil and/or fat is not necessarily to have an appearance similar to the fat of the chunk meat, and may be contained in the entire mixture containing the protein food material and the oil and/or fat in a highly uniform state.

-Binder and Enzyme-

It is preferable that the protein food material is mixed with at least one selected from the group consisting of a binder and an enzyme that cures a protein, as necessary.

In a case in which the protein food material and at least one selected from the group consisting of a binder and an enzyme that cures a protein are contained, the protein food material can be easily maintained in one integrated shape.

The binder is not particularly limited as long as the binder is edible and can maintain the shape of the protein food material.

Examples of the binder include a protein, a thickening polysaccharide, and a starch. As the binder, one kind of binder may be contained alone, or two or more kinds of binders may be contained.

The protein used as the binder may be the same as or different from the protein contained in the protein food material.

Examples of the protein used as the binder include a vegetable protein and an animal protein.

Examples of the vegetable protein used as the binder include proteins derived from wheat, soybean, and rice.

Examples of the animal protein used as the binder include a milk protein and egg white.

As the enzyme that cures a protein, transglutaminase is preferably used.

As the transglutaminase, a commercially available product can be used, and examples thereof include ACTIVA (registered trademark) series manufactured by AJINOMOTO CO., INC.

Examples of the thickening polysaccharide include agar, carrageenan (x-carrageenan or ι-carrageenan), alginic acid, alginate, agarose, furcellaran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, arabic gum, arabinogalactan, dextran, carboxymethyl cellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin

The thickening polysaccharide may be used as a gelling agent or may be gelled.

The gelling agent is preferably used together with a gelling accelerator.

The gelling accelerator is a compound whose gelling is accelerated by contact with the gelling agent, and a function thereof is exerted by a specific combination with the gelling agent.

Preferable combinations of the gelling agent and the gelling accelerator are as follows.

1) A combination of a polyvalent metal ion (specifically, an alkali metal ion such as potassium or an alkaline earth metal ion such as calcium or magnesium) as a gelling accelerator, and carrageenan, alginate, gellan gum, azotobacter vinelandii gum, pectin, carboxymethyl cellulose sodium salt, or the like as a gelling agent.
2) A combination of boric acid or another boron compound as a gelling accelerator and guar gum, locust bean gum, tara gum, cassia gum, or the like as a gelling agent.
3) A combination of an acid or an alkali as a gelling accelerator and alginate, glucomannan, pectin, chitin, chitosan, curdlan, or the like as a gelling agent.
4) A water-soluble polysaccharide that reacts with a gelling agent to form a gel is used as a gelling accelerator. Specifically, a combination in which xanthan gum is used as a gelling agent and cassia gum is used as a gelling accelerator, a combination in which carrageenan is used as a gelling agent and locust bean gum is used as a gelling accelerator, and the like can be exemplified.

From the viewpoint of obtaining an appearance and a texture similar to those of livestock meat, the combination of the gelling agent and the gelling accelerator is preferably "1) the combination of a polyvalent metal ion (specifically, an alkali metal ion such as potassium or an alkaline earth metal ion such as calcium or magnesium) as a gelling accelerator, and carrageenan, alginate, gellan gum, azotobacter vinelandii gum, pectin, carboxymethyl cellulose sodium salt, or the like as a gelling agent".

The thickening polysaccharide used as the binder may be a thermally irreversible gel-forming polysaccharide and a thermally reversible gel-forming polysaccharide.

The thermally irreversible gel is a gel that maintains a state thereof even when heated once the gel is formed. The thermally irreversible gel-forming polysaccharide is a polysaccharide that forms a thermally irreversible gel.

The thermally irreversible gel-forming polysaccharide is a polysaccharide that is crosslinked by a reaction with a cation. Examples of the cation include cations exemplified in the description of a fat lump composition described below. Examples of the thermally irreversible gel-forming polysaccharide include alginic acid, curdlan, pectin (low methoxyl (LM) pectin, high methoxyl (HM) pectin, or the like), and deacylated (LA) gellan gum.

The thermally reversible gel-forming polysaccharide is a polysaccharide that forms a thermally reversible gel. Examples of the thermally reversible gel-forming polysaccharide include gelatin, agar, carrageenan, furcellaran, native gellan gum, locust bean gum, xanthan gum, guar gum, psyllium seed gum, glucomannan, tara gum, and tamarind seed gum.

In a case in which the binder contains a thermally irreversible gel-forming polysaccharide or a thermally reversible gel-forming polysaccharide, the binder may further contain a gelation retardant. The gelation retardant is a compound having a function of suppressing gelation of a thermally irreversible gel-forming polysaccharide or a thermally reversible gel-forming polysaccharide. The gelation retardant is preferably a chelating agent.

As the chelating agent, a known chelating agent can be suitably used. Examples of the chelating agent include oxycarboxylic acids such as tartaric acid, citric acid, and gluconic acid; aminocarboxylic acids such as iminodiacetic acid (IDA), nitrilotriacetic acid (NTA), and ethylenediaminetetraacetic acid (EDTA); condensed phosphoric acids such as pyrophosphoric acid and tripolyphosphoric acid; and salts thereof.

Examples of the starch include wheat starch, cassava starch, rice starch, glutinous rice starch, corn starch, waxy corn starch, sago starch, potato starch, arrowroot starch, lotus root starch, green bean starch, sweet potato starch, waxy potato starch, waxy cassava starch, and waxy wheat starch.

A total content of the binder and the enzyme that cures a protein contained in the protein food material is preferably from 0.1% by mass to 30% by mass, more preferably from 0.5% by mass to 25% by mass, and still more preferably from 1% by mass to 20% by mass, with respect to the entire protein food material.

-Other Additives-

The protein food material may be mixed with other additives, as necessary.

Examples of the other additives include water, a seasoning, an acidulant, a bittering agent, a spice, a sweetener, an antioxidant, a color coupler, a flavor, a stabilizer, and a preservative.

A content of the other additives is preferably from 0% by mass to 20% by mass with respect to the entire mixture containing the protein food material and the additives.

<Molded meat alternative>

One suitable application form of the protein food material is a molded meat alternative containing the protein food material. In a case in which the protein food material according to the disclosure is contained, the molded meat alternative has an excellent meat appearance. The molded meat alternative is preferably a molded meat alternative for a chunk meat (hereinafter, also referred to as "meat alternative for chunk meat"). Since the protein food material obtained by the production method according to the disclosure has an excellent fibrous texture imitating the livestock meat, the meat alternative for chunk meat according to the disclosure can have an appearance similar to that of "chunk meat" of livestock meat.

It is preferable that the chunk meat has a lean-like portion having a color close to red and a fat-like portion having a color close to white on the surface thereof. The fat on the surface of the chunk meat has a certain area (for example, for a part with less fat of the chunk meat, such as beef fillet meat, an area of fat on the surface of the chunk meat is about 3%). On the surface of the chunk meat, the fat often has an elongated shape.

From the viewpoint of improving the taste and texture of the molded meat alternative, it is preferable that the molded meat alternative contains a protein food material and an oil and/or fat, and more preferably contains a protein food material, an oil and/or fat, and a polysaccharide. In some in some embodiments, the oil and/or fat contained in the protein food material may be a granular material containing an oil and/or fat. The granular material containing an oil and/or fat may be in the form of, for example, capsule-shaped oil and/or fat, oil and/or fat encapsulated in a gel, or the like.

An average particle diameter of the granular materials may be from 10 $\mu$m to 500 $\mu$m. The average particle diameter of the granular materials is a value measured by observation with a transmission optical microscope.

The polysaccharide can function as a binder between the protein food material and the granular material containing an oil and/or fat. Examples of the polysaccharide include the thickening polysaccharides described above as the binder which may be contained in the protein food material.

Hereinafter, a meat alternative which is one of the application forms of the protein food material obtained by the production method according to the disclosure will be described using a chunk meat alternative as an example.

(Lean-Like portion)

A lean- like portion refers to a part corresponding to a part that looks lean in a chunk meat-like meat alternative.

The lean-like portion has an appearance similar to that of lean of a chunk meat.

The lean- like portion contains a protein food material obtained by the production method according to the disclosure, and preferably contains an oil and/or fat, a binder, and other additives, as necessary.

The details of the oil and/or fat, the binder, and the other additives are as described above, and the descriptions thereof are omitted here.

The lean- like portion may be colored red using a colorant.

As the colorant used for coloring the lean- like portion is preferably an edible and red colorant. From the viewpoint that the lean- like portion exhibits a red color before heat cooking and exhibits a color close to brown after heat cooking, it is preferable that the edible and red colorant has a property of discoloring by heating. Examples of the red colorant include a natural beet red colorant, a cochineal colorant, and a gardenia red colorant, and among them, a natural beet red colorant is preferable.

From the viewpoint of improving the taste and texture of the meat alternative, the lean-like portion may contain a protein food material and an oil and/or fat. In some embodiments, the oil and/or fat contained in the protein food material may be a capsule-shaped oil and/or fat. The polysaccharide can function as a binder between the protein food material and the capsule-shaped oil and/or fat.

Examples of the capsule-shaped oil and/or fat include a microcapsule encapsulating edible oil and/or fat.

Examples of the microcapsule encapsulating edible oil and/or fat include a microcapsule encapsulating edible oil having a core part containing an edible oil and/or fat and a shell part containing an edible ionically crosslinkable polymer crosslinked with a polyvalent cation and encapsulating the core part.

The edible oil and/or fat contained in the core part is preferably an edible oil and/or fat having a melting point of 30°C or lower, and may be either a natural oil or a synthetic oil, or a mixture thereof. The edible oil and/or fat is preferably a saturated fatty acid or an unsaturated fatty acid, more preferably a saturated fatty acid having from 12 to 30 carbon atoms or an unsaturated fatty acid having from 12 to 30 carbon atoms, and still more preferably an unsaturated fatty acid having from 16 to 24 carbon atoms Examples of the unsaturated fatty acid having a melting point of 30°C or lower include a triglyceride of a medium-chain fatty acid having 6 to 12 carbon atoms (medium-chain fatty acid triglyceride), such as caproic acid, caprylic acid, capric acid, or lauric acid, a vegetable oil and/or fat such as coconut oil, sesame oil, olive oil, corn oil, rapeseed oil, safflower oil, soybean oil, sunflower oil, nut oil, grape seed oil, or linseed oil, and vitamin E.

The core part may contain other components other than water and the edible oil and/or fat, as necessary. Examples of the other components include an amino acid, a stabilizer, an excipient, and a flavor.

It is preferable that the shell part encapsulates the core part and contains an edible ionically crosslinkable polymer that is crosslinked with a polyvalent cation.

As the edible ionically crosslinkable polymer that is crosslinked with a polyvalent cation, a known ionically crosslinkable polymer crosslinked with a polyvalent cation can be used. The ionically crosslinkable polymer is not particularly limited as long as the ionically crosslinkable polymer can be used for food, and examples thereof include pectin or a derivative thereof, alginic acid or a salt thereof, gellan gum, carrageenan, polygalacturonic acid, and a mixture thereof.

The shell part may contain a component other than an ionically crosslinkable polymer, and examples of the other component include a thickener of a polysaccharide other than carrageenan and pectin, such as gellan gum, and a plasticizer for imparting flexibility in a dry state.

The microcapsule encapsulating edible oil and/or fat may have a number average particle diameter of from 10 $\mu$m to 300 $\mu$m. A coefficient of variation (CV value) of the number average particle diameter is also preferably 30% or less.

The microcapsule encapsulating edible oil and/or fat can be produced, for example, by a production method including: a step A of obtaining an oil-in-water droplet dispersion using an aqueous phase containing an edible ionically crosslinkable polymer and a polyvalent cation chelate compound and an oil phase containing an edible oil and/or fat having a melting point of 30°C or lower, a step B of mixing the oil-in-water droplet dispersion prepared in the step A and an edible oil and/or fat to obtain an oil-in-water-in-oil droplet dispersion in which oil-in-water droplets are dispersed in the edible oil and/or fat, and a step C of obtaining a mixed solution of the oil-in-water-in-oil droplet dispersion prepared in the step B and the edible oil and/or fat containing a pH lowering agent.

(Fat-Like portion)

The fat-like portion refers to a part having an appearance similar to fat (generally, a part also referred to as fat) of a chunk meat.

It is preferable that the fat-like portion contains an oil and/or fat, and contains a gel, as necessary.

-Oil and/or fat-

Examples of the oil and/or fat include a vegetable oil and/or fat and an animal oil and/or fat.

Examples of the vegetable oil and/or fat include rapeseed oil, soybean oil, palm oil, olive oil, rice oil, corn oil, and coconut oil. Note that the vegetable oil and/or fat refers to an oil and/or fat obtained from a plant.

Examples of the animal oil and/or fat include beef tallow, lard, whale oil, and fish oil. Note that the animal oil and/or fat refers to an oil and/or fat obtained from an animal.

A melting point of the oil and/or fat is not particularly limited, and may be, for example, 300°C or lower.

The melting point of the oil and/or fat is a value measured by a thermal analysis measurement apparatus.

As the thermal analysis measurement apparatus, for example, SSC5000DSC200 manufactured by Seiko EG&G Co., Ltd. can be used.

The melting point of the oil and/or fat is measured by adding 3 mg of a sample to an apparatus and performing a measurement at a heating rate of 3 °C/min.

-Emulsion-

It is also preferable that the oil and/or fat contains a fat-like portion in an emulsion state.

Herein, the term "emulsion" refers to an emulsion that contains an oil and/or fat and water and is in an emulsified state such as an oil-in-water emulsion or a water-in-oil emulsion.

Examples of the oil and/or fat contained in the emulsion include the same oils and fats as described above.

A content of the oil and/or fat in the emulsion is preferably from 5% by mass to less than 90% by mass, more preferably from 10% by mass to 80% by mass, and still more preferably from 15% by mass to 70% by mass, with respect to the entire emulsion.

The water contained in the emulsion may be any water that can be used for food, and is not particularly limited.

A content of the water in the emulsion is preferably from 10% by mass to 95% by mass, more preferably from 20% by mass to 90% by mass, and still more preferably from 30% by mass to 85% by mass, with respect to the entire emulsion.

It is preferable that the emulsion contains a thickening polysaccharide. In a case in which a thickening polysaccharide is contained, water retainability of the emulsion can be improved.

The thickening polysaccharide is not particularly limited, and the thickening polysaccharides described above can be applied.

A content of the thickening polysaccharide in the emulsion is preferably from 0.1% by mass to 5% by mass, and more preferably from 0.5% by mass to 3% by mass, with respect to the entire emulsion.

It is preferable that the emulsion contains a protein. In a case in which the emulsion contains a protein, adhesion between the lean-like portion and the fat-like portion increases.

The protein is not particularly limited, and the proteins described above can be applied.

A content of the protein in the emulsion is preferably from 0.1% by mass to 10% by mass, and more preferably from 0.5% by mass to 5% by mass, with respect to the entire emulsion.

The emulsion may contain a surfactant.

Examples of the surfactant contained in the emulsion include an edible surfactant.

Examples of the edible surfactant include glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, and lecithin.

It is preferable that the glycerin fatty acid ester contains a monoglyceride as a main component.

The monoglyceride is preferably a monoesterified product of a saturated or unsaturated fatty acid having from 2 to 24 carbon atoms and glycerin.

Examples of the fatty acid include behenic acid, stearic acid, and palmitic acid.

The glycerin fatty acid ester may contain a diglyceride.

The diglyceride is preferably a diesterified product of a saturated or unsaturated fatty acid having from 2 to 24 carbon atoms and glycerin.

The polyglycerin fatty acid ester is preferably an esterified product of a saturated or unsaturated fatty acid having from 2 to 24 carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by esterifying a hydroxyl group derived from glycerin of a monoglyceride using an organic acid.

Examples of the organic acid include citric acid, succinic acid, acetic acid, and lactic acid, citric acid and succinic acid are preferable, and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having from 2 to 18 carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan coconut oil fatty acid.

The propylene glycol fatty acid ester is an esterified product of a fatty acid and propylene glycol.

As the fatty acid used for the synthesis of the propylene glycol fatty acid ester, a saturated or unsaturated fatty acid having from 2 to 24 carbon atoms is preferable.

Specific examples of the propylene glycol fatty acid ester include propylene glycol palmitate, propylene glycol stearate, and propylene glycol behenate.

The sucrose fatty acid ester is an esterified product of sucrose and a fatty acid.

As the fatty acid used for the synthesis of the sucrose fatty acid ester, a saturated or unsaturated fatty acid having from 2 to 24 carbon atoms is preferable.

The sucrose fatty acid ester is preferably an esterified product of sucrose and one or two or more fatty acids selected from the group consisting of caprylic acid, capric acid, lauric acid, myristic acid, palmitic acid, palmitoleic acid, stearic acid, oleic acid, arachidic acid, and behenic acid.

The polyglycerin condensed ricinoleic acid ester is an esterified product of polyglycerin fatty acid ester and a ricinoleic acid condensate.

Specific examples of the polyglycerin condensed ricinoleic acid ester include an esterified product of the compound described as a specific example of the polyglycerin fatty acid ester described above, and a ricinoleic acid condensate.

Lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, enzymatically decomposed lecithin (so-called lysolecithin) can be used.

The enzymatically decomposed lecithin is a composition containing lysophosphatidylcholine in which one fatty acid of a phosphatidylcholine molecule is lost by an enzyme such as phospholipase. Note that, in the disclosure, the enzymatically decomposed lecithin includes so-called hydrogenated enzymatically decomposed lecithin in which oxidation stability is improved by performing hydrogenation to convert a conjugated fatty acid into a saturated fatty acid.

A hydrophilic-hydrophobic balance (HLB) value of the surfactant is, for example, preferably 8 or more, more preferably 10 or more, and still more preferably 12 or more, from the viewpoint of emulsion dispersibility.

An upper limit of the HLB value of the emulsifier is not particularly limited, and is generally 20 or less, and preferably 18 or less.

HLB usually means a hydrophilic-hydrophobic balance used in the field of surfactants. The HLB value is calculated using the following Kawakami equation. Note that in a case in which a commercially available product is used as the surfactant, commercially available catalog data is preferentially adopted.

$$HLB = 7 + 11.7\log(Mw/Mo)$$

Here, Mw represents a formula weight of a hydrophilic group of the surfactant, and Mo represents a formula weight of a hydrophobic group of the surfactant.

The hydrophobic group of the surfactant is an atomic group having low affinity with water. Examples of the hydrophobic group include an alkyl group, an alkenyl group, an alkylsilyl group, and a perfluoroalkyl group. Specifically, in a case in which the surfactant is the "glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, or lecithin" described above, the hydrophobic group refers to an alkyl group or alkenyl group derived from a fatty acid.

The hydrophilic group of the surfactant is an atomic group having high affinity with water. Specifically, the hydrophilic group of the surfactant refers to an atomic group other than a hydrophobic group in the structure of the surfactant.

-Gel-

Even in a case in which a temperature change or the like occurs, it is preferable that the fat-like portion contains a gel, from the viewpoint that the oil and/or fat contained in the fat-like portion does not flow out and more maintains the appearance similar to that of a chunk meat, and from the viewpoint that a texture similar to that of a chunk meat is easily obtained.

In the disclosure, the gel refers to a gel that contains at least water and exhibits a behavior as an elastic solid.

The elasticity refers to a property of an object deformed by receiving an external force to return to an original shape after the external force is removed.

It is preferable that the gel contains an edible gelling agent.

Examples of the edible gelling agent include a thickening polysaccharide.

Specific examples of the thickening polysaccharide include agar, carrageenan (κ-carrageenan or ι-carrageenan), alginic acid, alginate, agarose, furcellaran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, arabic gum, arabinogalactan, dextran, carboxymethyl cellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin.

The gelling agent is preferably used together with a gelling accelerator.

The gelling accelerator is a compound whose gelling is accelerated by contact with the gelling agent, and a function thereof is exerted by a specific combination with the gelling agent.

Preferable combinations of the gelling agent and the gelling accelerator are as follows.

1) A combination of a polyvalent metal ion (specifically, an alkali metal ion such as potassium or an alkaline earth metal ion such as calcium or magnesium) as a gelling accelerator, and carrageenan, alginate, gellan gum, azotobacter vinelandii gum, pectin, carboxymethyl cellulose sodium salt, or the like as a gelling agent.
2) A combination of boric acid or another boron compound as a gelling accelerator and guar gum, locust bean gum, tara gum, cassia gum, or the like as a gelling agent.
3) A combination of an acid or an alkali as a gelling accelerator and alginate, glucomannan, pectin, chitin, chitosan, curdlan, or the like as a gelling agent.
4) A water-soluble polysaccharide that reacts with a gelling agent to form a gel is used as a gelling accelerator. Specifically, a combination in which xanthan gum is used as a gelling agent and cassia gum is used as a gelling accelerator, a combination in which carrageenan is used as a gelling agent and locust bean gum is used as a gelling accelerator, and the like can be exemplified.

From the viewpoint of obtaining a chunk meat-like meat alternative having an appearance and a texture similar to those of livestock meat, the combination of the gelling agent and the gelling accelerator is preferably "1) the combination of a polyvalent metal ion (specifically, an alkali metal ion such as potassium or an alkaline earth metal ion such as calcium or magnesium) as a gelling accelerator, and carrageenan, alginate, gellan gum, azotobacter vinelandii gum, pectin, carboxymethyl cellulose sodium salt, or the like as a gelling agent".

20

-Aspects of Components Contained in Fat-Like portion-

The fat-like portion is preferably one of the following component aspects.

(1) The fat-like portion contains an oil and/or fat as a main component.
(2) The fat-like portion contains an emulsion as a main component.
(3) The fat-like portion contains an oil and/or fat and a gel.

The "main component" means that the corresponding component is contained in an amount of 90% by mass or more with respect to the entire fat-like portion.

(1) Case In Which Fat-Like portion Contains Oil and/or Fat as Main Component (Hereinafter, Fat-Like portion Example (1))

In the case in which the fat-like portion is a "fat-like portion example (1)", a content of the oil and/or fat contained in the fat-like portion is preferably 90% by mass or more, more preferably 92% by mass or more, and still more preferably 95% by mass or more, with respect to the entire fat-like portion.

Note that, in the case in which the fat-like portion is the "fat-like portion example (1)", considering additives and the like contained in the fat-like portion, an upper limit of a content of the oil and/or fat contained in the fat-like portion may be 99% by mass or less or 98% by mass or les with respect to the entire fat-like portion.

In the case in which the fat-like portion is the "fat-like portion example (1)", it is preferable to use an oil and/or fat that becomes cloudy when coagulated from the viewpoint of obtaining a chunk meat-like meat alternative having an appearance similar to that of livestock meat.

Specifically, coconut oil, palm oil, shea butter, cocoa butter, and the like are preferable as the oil and/or fat used in the case in which the fat-like portion is the "fat-like portion example (1)".

(2) Case In Which Fat-Like portion Contains Emulsion as Main Component (Hereinafter, Fat-Like portion Example (2))

Since an emulsion often exhibits a white color, in a case in which the fat-like portion contains an emulsion as a main component, the fat-like portion also tends to be white. Therefore, in a case in which an aspect of a fat-like portion example (2) is adopted as the fat-like portion, a chunk meat-like meat alternative having an appearance close to that of livestock is obtained.

Note that the emulsion may be an oil-in-water emulsion or a water-in-oil emulsion.

In the case in which the fat-like portion is the "fat-like portion example (2)", a content of the emulsion is preferably 90% by mass or more, more preferably 92% by mass or more, and still more preferably 95% by mass or more, with respect to the entire fat-like portion.

Note that, in the case in which the fat-like portion is the "fat-like portion example (2)", considering addition of additives and the like, an upper limit of the content of the emulsion contained in the fat-like portion may be 99% by mass or less or 98% by mass or les with respect to the entire fat-like portion.

A content of the oil and/or fat contained in the emulsion is preferably from 5% by mass to less than 90% by mass, more preferably from 10% by mass to 80% by mass, and still more preferably from 15% by mass to 70% by mass, with respect to the entire emulsion.

A content of the water contained in the emulsion is preferably from 10% by mass to 95% by mass, more preferably from 20% by mass to 90% by mass, and still more preferably from 30% by mass to 85% by mass, with respect to the entire emulsion.

A content of the surfactant contained in the emulsion is preferably from 0.01% by mass to 5% by mass, more preferably from 0.05% by mass to 4% by mass, and still more preferably from 0.1% by mass to 3% by mass, with respect to the entire emulsion.

(3) Case In Which Fat-Like portion Contains Oil and/or fat and Gel (Hereinafter, Fat-Like portion Example (3))

In a case in which the fat-like portion contains an oil and/or fat and a gel, the oil and/or fat contained in the fat-like portion is easily retained by the gel even in a case in which a temperature change or the like occurs. Therefore, even in a case in which a temperature change or the like occurs, the oil and/or fat is less likely to flow out from the fat-like portion, and the appearance similar to that of a chunk meat is more easily maintained. Even in a case in which a raw chunk meat-like meat alternative is cooked, the oil and/or fat is easily retained by the gel, and when the raw chunk meat-like meat alternative after heat cooking is eaten, the oil and/or fat contained in the fat-like portion overflows, and it is easy to obtain a texture similar to that of the cooked chunk meat.

From the viewpoint that the oil and/or fat hardly flows out from the fat-like portion, in the case in which the fat-like portion is the aspect of the fat-like portion example (3), the oil and/or fat is preferably encapsulated in the gel.

In a case in which the oil and/or fat is encapsulated in the gel, it is preferable that a large amount of the oil and/or fat is dispersed in the gel in a state of a granular material containing an oil and/or fat, specifically, in a state close to a spherical shape (hereinafter, referred to as "oil droplet").

A particle diameter of the oil droplet is preferably from 20 $\mu$m to 500 $\mu$m, more preferably from 30 $\mu$m to 400 $\mu$m, and still more preferably from 50 $\mu$m to 300 $\mu$m.

Since the oil and/or fat is encapsulated in the gel, even in a case in which the raw chunk meat-like meat alternative is heat-sterilized after formation of the raw chunk meat-like meat alternative, the oil and/or fat contained in the fat-like portion is prevented from dissolving and flowing down from the fat-like portion. Therefore, even in the case in which the raw chunk meat-like meat alternative is heat-sterilized, the fat-like portion can be retained, and the preservability of the chunk meat-like meat alternative in terms of hygiene can be improved.

The particle diameter of the oil droplet is measured by observing the fat-like portion with a transmission optical microscope.

As the transmission microscope, for example, an inverted microscope (product name: Axio Observer.Z1) manufactured by Carl Zeiss AG or the like can be used.

Hereinafter, a measurement procedure of the particle diameter of the oil droplet will be described.

In a state in which the oil and/or fat is solidified at a temperature equal to or lower than a melting point of the oil and/or fat, the gel is dissolved with 3% of sodium carbonate or the like to collect the oil droplets from the fat-like portion, and the oil droplets are placed on a polystyrene petri dish having a diameter of 60 mm$\varphi$. At this time, the collected oil droplets are prevented from overlapping in a depth direction of the petri dish. The oil droplets collected in the petri dish are observed with a transmission optical microscope and imaged at an objective magnification of 5 times. 200 or more images of the oil droplets included in a screen obtained by imagining are selected, and an equivalent circle diameter of each oil droplet (a diameter of a perfect circle corresponding to an area of the image of the oil droplet) is calculated by image processing software (for example, ImageJ). An arithmetic average value of the calculated equivalent circle diameters of the oil droplets is calculated, and the arithmetic average value is defined as a particle diameter of the oil droplet.

In a case in which the fat-like portion contains an oil and/or fat encapsulated in the gel, it is preferable that transparency of the fat-like portion is improved by heating.

The fat contained in the chunk meat is in a state close to white in a non-heated state, but the transparency increases when heat cooking is performed. Therefore, with the configuration of the chunk meat-like meat alternative according to the embodiment, it is easy to have an appearance close to that of livestock meat when the raw chunk meat-like meat alternative is heat-cooked.

Whether or not the transparency of the fat-like portion is improved by heating is determined by the following procedure.

The transparency of the fat-like portion of the raw a chunk meat-like meat alternative is measured using a color reader (CR-10Plus, manufactured by Konica Minolta, Inc.) at three arbitrary different points, and an arithmetic average value of the obtained values is taken as a measured value A. On a hot plate having a surface temperature of 160°C, the raw chunk meat-like meat alternative is placed with the surface having a measurement site facing downward, and the hot plate is heated by being allowed to stand for 2 minutes. The heated raw chunk meat-like meat alternative is taken out from the hot plate, the transparency of the measurement site after heating is measured in the same procedure as in the measured value A, and an arithmetic average value of the obtained values is defined as a measured value B. In a case in which the measured value B shows a higher transparency than the measured value A, it is determined that the transparency of the fat-like portion is improved by heating.

In the case in which the fat-like portion is the "fat-like portion example (3)", a content of the oil and/or fat is preferably from 10% by mass to 70% by mass, more preferably from 15% by mass to 60% by mass, and still more preferably from 20% by mass to 50% by mass, with respect to the entire fat-like portion.

In the case in which the fat-like portion is the "fat-like portion example (3)", a content of the gel is preferably from 30% by mass to 90% by mass, more preferably from 40% by mass to 85% by mass, and still more preferably from 50% by mass to 80% by mass, with respect to the entire fat-like portion.

In the case in which the fat-like portion is the "fat-like portion example (3)", the fat-like portion may be an aspect in which the fat-like portion contains a fat lump composition containing a granular material containing an oil and/or fat and an edible ionically crosslinkable polymer crosslinked with a cation.

As the oil and/or fat contained in the fat lump composition, the same oil and/or fat as those described above can be used.

An average particle diameter of the granular materials may be from 50 $\mu$m to 500 $\mu$m.

The average particle diameter of the granular materials is a value measured by observing the fat lump composition with a transmission optical microscope.

It is preferable that the fat lump composition contains an edible ionically crosslinkable polymer that is crosslinked with a cation. The term "edible" means a property that does not adversely affect a health condition when orally ingested by a human.

The term "ionically crosslinkable polymer" means a polymer that is crosslinked by a reaction with an ion.

Examples of the edible ionically crosslinkable polymer include alginic acid, carrageenan, LM pectin, HM pectin, and LA gellan gum.

From the viewpoint of improving the heat resistance of the fat lump composition, the edible ionically crosslinkable polymer is preferably at least one selected from the group consisting of alginic acid, LM pectin, and LA gellan gum.

The cation is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

The crosslinking of the edible ionically crosslinkable polymer can be performed, for example, by mixing a solution containing an ionically crosslinkable polymer, a surfactant, and water (an ionically crosslinkable polymer solution) and an aqueous solution containing a cation.

The fat lump composition can be produced, for example, according to an aspect described in Examples described below.

A granular material containing an oil and/or fat (an oil and/or fat encapsulated in a gel or a capsule-like oil and/or fat) may be contained inside the raw chunk meat-like meat alternative.

The "inside" means that it is not present on the surface of the chunk meat-like meat alternative.

In a case in which the oil and/or fat capsulated in a gel or the capsule-like oil and/or fat is contained inside the raw chunk meat-like meat alternative, the oil and/or fat easily stays in the chunk meat-like meat alternative. In this case, it is easy to obtain a raw chunk meat-like meat alternative that maintains a texture closer to that of livestock meat.

Examples of the granular material containing the oil and/or fat contained inside the raw chunk meat-like meat alternative include the same oil and/or fat encapsulated in a gel or capsule-like oil and/or fat described above, and the description there of is omitted.

<Method of Producing Molded Meat Alternative>

A method of producing a molded meat alternative according to the disclosure is not particularly limited.

An aspect of the method of producing a molded meat alternative according to the disclosure include, for example, a method including molding a lean-like portion with red coloring and then forming a groove in a surface of the molded lean-like portion, or forming a groove in a surface of the lean-like portion while molding the lean-like portion with red coloring (lean-like portion forming step), and then attaching the oil and/or fat to the groove to form a fat-like portion (fat-like portion forming step).

Examples of another aspect of the method of producing a molded meat alternative according to the disclosure include a method including:

a first step of mixing the protein food material according to the disclosure and a binder (for example, a polysaccharide) to obtain a mixture; and
a second step of stretching the mixture to obtain a post-stretched mixture in which a fiber direction of the protein food material is oriented in one direction.

In the first step, the method of mixing the protein food material according to the disclosure and a binder is not particularly limited, and examples thereof include a method of mixing by hand and a method using a known mixing machine. Examples of the mixing machine include a mixer.

It is preferable to adjust the size of the protein food material by splitting the protein food material by hand before mixing the protein food material and the binder.

In a case in which the molded meat alternative to be produced contains an oil and/or fat, the fat lump composition described above, other additives, and the like, it is preferable to mix these materials together with the protein food material and the binder in the first step.

In the second step, the method of stretching the mixture obtained in the first step (hereinafter, also referred to as "first step mixture") is not particularly limited as long as a post-stretched mixture in which a fiber direction of the protein food material is oriented in one direction is obtained.

The method of producing a molded meat alternative according to the disclosure preferably further includes, after the second step, a third step of molding the post-stretched mixture to obtain a molded product, and then heating and curing the molded product.

For example, in a case in which a thermally irreversible gel-forming polysaccharide is contained as the binder, formation of a gel containing a thermally irreversible gel-forming polysaccharide is promoted by heating the molded product. As a result, the molded product is cured, and the shape of the molded meat alternative is more easily maintained.

The third step may include a step of molding the post-stretched mixture to obtain a molded product, and then forming a pattern (a marbled pattern) similar to fat on a surface of the molded product for the purpose of brining an appearance of a molded meat alternative (specifically, a chunk meat-like meat alternative) closer to an appearance of livestock meat (hereinafter, also referred to as "fat-like portion forming step").

The fat-like portion forming step is preferably, for example, a step of forming a groove having a depth of 100 $\mu$m or more in the surface of the molded product and forming a fat-like portion by attaching an oil and/or fat to the formed groove.

Examples of a method of forming a groove in the surface of the molded product include a method of digging a surface with a knife and a method of forming a groove with a mold, and the method of forming a groove with a mold is preferable.

Subsequently, the oil and/or fat is attached to the groove formed in the surface of the molded product, and the groove is filled to form a pattern similar to that of fat.

When the oil and/or fat is attached to the groove formed in the surface of the molded product, the oil and/or fat may be in a liquid state, a semi-solid state in which a liquid and a solid are mixed, or a solid state, and the liquid state or the semi-solid state is preferable.

When the oil and/or fat is attached to the groove formed in the surface of the molded product, the oil and/or fat may be attached in an emulsion state.

In the case in which the oil and/or fat is attached in the form of an emulsion, it is preferable that an emulsion containing a gelling agent, the oil and/or fat, and water (referred to as "gelling emulsifier") is attached to the groove formed in the surface of the molded product, and then the gelling emulsion attached to the groove is gelled.

The gelling emulsion is preferably an oil-in-water emulsion.

An oil droplet diameter of the oil and/or fat in the gelling emulsion is preferably from 20 $\mu$m to 500 $\mu$m, more preferably from 30 $\mu$m to 400 $\mu$m, and still more preferably from 50 $\mu$m to 300 $\mu$m.

Examples of a method of gelling the gelling emulsion attached to the groove include a method of gelling the molded product in which the gelling emulsion is attached to the groove by charging the molded product into an aqueous solution containing a gelling accelerator.

EXAMPLES

Hereinafter, Examples will be described, but a production method and a protein food material according to the disclosure are not limited to these Examples at all.

[Example 1]

Defatted soybean powder (SHOWA FRESH RF, manufactured by Showa Sangyo Co., Ltd., in Table 1, indicated by "Defatted soybean protein") as a vegetable protein and a wheat gluten (PRO-GLU 65, manufactured by THE TORIGOE CO., LTD.) as a protein were mixed in the amounts (mass ratio) shown in Table 1 to obtain a mixed powder 1.

The defatted soybean powder used contains 54.7% by mass of a protein.

Next, a twin screw extruder (product name: KEI-45-25, manufactured by kohwakougyou inc.) was prepared. The twin screw extruder has a cross section schematically illustrated in Fig. 1. A shape of a discharge die is a flat shape.

A flat discharge die (lip clearance: 3 mm) having a length of 440 mm in an extrusion direction was attached to a discharge port of the twin screw extruder set so that a screw length was 1,100 mm and a maximum temperature of the tip of the screw was 160°C. The mixed powder 1 was introduced into the twin screw extruder at 530 g/min, the mixed powder 1 was kneaded by pressurization and heating so that a temperature of a protein-containing mixture at an outlet of the extruder was the temperature shown in Table 1 while adding water having a mass ratio shown in Table 1 to the extruder, and the kneaded product was discharged from the discharge port of the discharge die at a screw rotation speed of 250 rpm (revolutions per minute) at a discharge rate of 45 kg/hr.

Note that the composition of the protein-containing mixture, and the conditions set in each of the extrusion section and the discharge die included in the twin screw extruder are collectively shown in Table 1.

A protein food material 1 was obtained by controlling the temperature of the discharge die so that the temperature of the protein-containing mixture at the discharge port of the discharge die was 110°C.

[Examples 2 and 3]

Protein food materials 2 and 3 of Examples 2 and 3 were obtained in the same manner as that of Example 1, except that the temperature of the protein-containing mixture at the outlet of the discharge die was changed to the temperature shown in Table 1 in Example 1.

[Examples 4 and 5]

Protein food materials 4 and 5 of Examples 4 and 5 were obtained in the same manner as that of Example 1, except that the temperature of the protein-containing mixture at the outlet of the extrusion section and the temperature of the protein-containing mixture at the outlet of the discharge die were changed to the temperatures shown in Table 1 in Example 1.

[Examples 6 and 7]

Protein food materials 6 and 7 of Examples 6 and 7 were obtained in the same manner as that of Example 1, except that the length of the discharge die and the temperature of the protein-containing mixture at the outlet of the discharge die were changed to the length and the temperature shown in Table 1 in Example 1.

[Example 8]

A protein food material 8 of Example 8 was obtained in the same manner as that of Example 1, except that the discharge die was changed to a flat discharge die in which an uneven shape (that is, a plurality of recesses formed on the inner wall of the discharge die) was provided as schematically illustrated in Figs. 4A to 4C in Example 1. The uneven shape was provided in a region (a region indicated by the reference sign Y in Fig. 4A) located at from 250 mm to 440 mm from the downstream end of the extrusion section in the extrusion direction.

[Example 9]

A protein food material 9 of Example 9 was obtained in the same manner as that of Example 1, except that the mass of the raw material containing a vegetable protein (defatted soybean powder and wheat gluten) was changed to the mass ratio shown in Table 1, a colorant (KC-BROWN SP-3, brown, manufactured by Kobe Chemical Co., Ltd.) was added at the mass ratio shown in Table 1, and the outlet temperature of the discharge die was changed to the temperature shown in Table 1 in Example 1.

[Comparative Examples 1 and 2]

Protein food materials C1 and C2 of Comparative Examples 1 and 2 were obtained in the same manner as that of Example 1, except that the length and the lip clearance of the discharge die and the temperature of the protein-containing mixture at the outlet of the discharge die were changed to the length, the lip clearance, and the temperature shown in Table 2 in Example 1.

[Comparative Example 3]

A protein food material C3 of Comparative Example 3 was obtained in the same manner as that of Example 1, except that the temperature of the protein-containing mixture at the outlet of the discharge die was changed to the temperature shown in Table 2 in Example 1.

[Comparative Example 4]

A protein food material C4 of Comparative Example 4 was obtained in the same manner as that of Example 1, except that the temperature of the protein-containing mixture at the outlet of the discharge die was changed to the temperature shown in Table 2 in Example 1.

[Comparative Example 5]

A protein food material C5 of Comparative Example 5 was obtained in the same manner as that of Example 1, except that the temperature of the protein-containing mixture at the outlet of the extrusion section was changed to the temperature shown in Table 2 in Example 1.

[Comparative Example 6]

A protein food material C6 of Comparative Example 6 was obtained in the same manner as that of Example 1, except that the temperature of the protein-containing mixture at the outlet of the discharge die and the temperature of the protein-containing mixture at the outlet of the extrusion section were changed to the temperatures shown in Table 2 in Example 1.

[Measurements and Evaluations]

The following measurements and evaluations were performed using the protein food materials obtained in Examples and Comparative Examples.

The results are shown in Tables 1 and 2.

The protein food materials 1 to 9 of Examples 1 to 9 were subjected to all of the following measurements and evaluations.

The protein food materials C1, C2, C4, and C5 of Comparative Examples 1, 2, 4, and 5 were subjected to only the measurement of the number percentage of voids, the measurement of the average thickness of the wall separating the voids from each other, the evaluation of the fibrous texture, the evaluation of the (chewy) texture, and the evaluation of the meat-like color. Note that the protein food material C5 of Comparative Example 5 was a soft solid material partially having a swollen portion.

Since the protein food material C3 of Comparative Example 3 was not swollen, no other evaluation was performed except for the meat-like color.

In the protein food material C6 of Comparative Example 6, since scorching occurred and it was difficult to measure the voids, only the evaluation of the fibrous texture, the evaluation of the (chewy) texture, and the evaluation of the meat-like color were not performed.

Parts denoted by "-" in Tables 1 and 2 indicate that the corresponding measurement and evaluation were not performed.

<Measurements and Evaluations of Voids>

-Formation of Cross Section-

Ends of each of the protein food materials 1 to 9, C1, C2, C4, and C5 obtained in Examples and Comparative Examples were held with both hands, and the protein food material was torn in a tearing direction to obtain a tear piece. From the obtained tear piece, a fiber direction was determined by the method described above.

-Drying Treatment-

The protein food materials 1 to 9, C1, C2, C4, and C5 whose fiber direction was determined were allowed to stand in a vacuum oven (product name: VOS-201SD, manufactured by EYELA CO., LTD.) connected to a vacuum pump (product name: GCD-051XF, manufactured by ULVAC, Inc.), evacuated using a vacuum pump, and dried under a condition of 60°C for 17 hours.

-Measurement of Number Percentage of Voids-

The fiber direction was determined, and each of the protein food materials 1 to 9, C1, C2, C4, and C5 after the drying treatment was cut in a direction orthogonal to the fiber direction using a single-edged razor as a cutting unit to form a cut surface, thereby obtaining a measurement sample.

Using an optical microscope (product name: VHX-5000, manufactured by KEYENCE CORPORATION) equipped with a zoom lens (product name: VH-ZST, manufactured by KEYENCE CORPORATION), a cut surface (cross section for measurement) formed on a measurement sample was observed with an objective lens (product name: ZS-20, manufactured by KEYENCE CORPORATION) at a lens magnification of 30 times.

Voids present in the observed cut surface can be detected using commercially available software (MatLab, version 2018).

After in-plane unevenness of brightness was corrected, binarization was performed on the basis of brightness, and a dark part was extracted.

A labeling process and a morphological process were performed on a plurality of extracted dark regions, and morphological analysis of each dark region was performed. A dark region having a certain area or less ($0.01 \text{ mm}^2$ or less) was defined as noise and removed, and a void adjacent to a boundary of the image was further removed. The size of the void was detected, and a cross-sectional area ($\text{mm}^2$) of each void was calculated.

Based on the obtained cross-sectional area, a percentage (%) of the number of voids having a cross-sectional area of 0.1 mm$^2$ or less to the total number of voids present in the cut surface was calculated.

The number percentage (%) of voids in the protein food material was a value obtained by determining the fiber direction of each of five measurement samples prepared from the protein food material to be measured by the above-described method, performing the above-described measurement on each measurement sample, calculating a number percentage (%) of voids, and then arithmetically averaging the obtained five number percentages (%).

-Measurement of Average Thickness of Wall Separating Voids From Each Other-

A minimum distance was obtained among the distances from the point on the contour of one hole (void) detected above to the point on the contour of another hole (void). A minimum distance average value was determined by selecting ten holes from the holes detected in one observation image, determining a minimum distance between adjacent holes, and averaging the values of the ten holes.

The minimum distance average value is determined for a total of five observation images. The minimum distance average value obtained from each of the five observation images was averaged to determine an average thickness of the wall separating the voids from each other.

-Calculation of Number of Voids Per Cross-Sectional Area-

The number of voids per cross-sectional area was calculated using the following equation.

Number of voids per cross-sectional area (number/mm$^2$) = (Total number of voids)/(Total cross-sectional area of protein food material)

-Calculation of Average Value of Aspect Ratios of Voids-

The protein food material that was frozen and stored at -20°C was thawed by allowing the protein food material to stand in an environment of room temperature (23°C) and a relative humidity of 20%RH.

After the fiber direction was confirmed, an X-ray transmission image was acquired under conditions of a radiation source of Cu (40 kV/30 mA), a lens of L4320, and binning of 2 using a three-dimensional X-ray microscope (product name: "nano3DX", manufactured by Rigaku Corporation), and then a three-dimensional image was reconstructed.

A cross-sectional image obtained by enlarging an area region of 1.5 cm square included in a plane parallel to the fiber direction was taken out, and a dark part surrounded by a bright part was visually detected as a void. Ten voids were randomly selected. In a case in which ten voids were not present in the cross-sectional image, another cross-sectional image was taken out.

Among the points constituting the outline of the void, two points having the longest distance therebetween were selected, a line segment connecting the two points was defined as a major axis, and a length of the line segment was defined as a length of the major axis. A straight line extended to infinity in the longitudinal direction of both ends of the major axis was defined as a major axis line. Among straight line groups orthogonal to the major axis line, a straight line group having two or more intersections with the contour of the void was defined as a minor axis group. In the minor axis group, a straight line having the longest distance between the most distant intersections is selected as a minor axis line. A line segment connecting an intersection of the minor axis line and two points farthest from each other on the contour of the void was defined as a minor axis, and a length thereof was defined as a length of the minor axis of the void. The aspect ratio of the void was calculated using the following equation.

$$\text{Aspect ratio of void} = \text{Length of major axis of void/Length of minor axis of void}$$

Then, the aspect ratios of ten voids were averaged to determine an average value.

-Calculation of Average Value of Angles At Which Major Axes of Voids Intersect With Each Other-

Similarly to the method of calculating the average value of the aspect ratios of the voids, ten voids were randomly selected. Similarly to the method of calculating the average value of the aspect ratios of the voids, the major axis of each of the selected voids was determined. A straight line extended to infinity in the longitudinal direction of both ends of the major axis was drawn. An arbitrary one of the ten straight lines was selected as a "reference line". An angle at which the reference line intersected with nine straight lines other than the reference line was measured. At this time, an angle from the reference line to the straight line other than the reference line in the counterclockwise direction was recorded. Note that in a case in which the reference line was parallel to the straight line other than the reference line, the angle was 0°. A straight line corresponding to the fifth smallest angle among the nine recorded angles was defined as a "center line".

Next, an angle at which the center line intersected with each of the nine straight lines other than the center line was measured. At this time, an angle of greater than 0° to 90° was recorded. Note that in a case in which the center line was parallel to the straight line other than the center line, the angle was 0°.

An average value of the recorded nine angles was adopted as an "average value of angles at which the major axes of the voids intersected with each other".

-Calculation of Standard Deviation of Number Percentage of Voids-

Each of the protein food materials 1 to 9 extruded from the extruder was cut to a length of 330 cm with the fiber direction (that is, the extrusion direction) as the longitudinal direction to obtain a sample.

Note that, since the discharge die had a flat shape, each of the protein food materials 1 to 9 had a sheet shape and was used as it was.

One surface of the sheet-like sample obtained as described above was marked with a point having the same position in the width direction, and was defined as a position A. A position distant from the position A by 1.5 cm in the width direction was defined as B, a position distant from the position B by 1.5 cm was defined as C, and a position distant from the position C by 1.5 cm was defined as D, and these positions were marked in the same manner.

For each 30 cm long in the fiber direction (extrusion direction) of the sheet-like sample, ten points were cut at positions orthogonal to the fiber direction to obtain ten cross sections.

For one cross section, using an optical microscope (product name: VHX-5000, manufactured by KEYENCE CORPORATION) equipped with a zoom lens (product name: VH-ZST, manufactured by KEYENCE CORPORATION), a cut surface (cross section for measurement) formed on a measurement sample is observed with an objective lens (product name: ZS-20, manufactured by KEYENCE CORPORATION) at a lens magnification of 30 times. Three points from the position A to the position B, from the position B to the position C, and from the position C to the position D were observed.

From each observation image, the number percentage of voids having a cross-sectional area of 0. 1 $mm^2$ or less was evaluated.

Standard Deviation A: Standard Deviation of Percentage of Number of Voids in Longitudinal Direction

For the percentage of the number of voids having a cross-sectional area of 0.1 $mm^2$ or less in the observation image from the position A to the position B, a standard deviation was calculated from ten values in the fiber direction (extrusion direction).

Similarly, the standard deviation was calculated for each of the observation images from the position B to the position C and from the position C to the position D.

Among the obtained standard deviations, a maximum value was taken as an evaluation value of the standard deviation A.

=Standard Deviation B: Standard Deviation of Percentage of Number of Voids in Width Direction=

A standard deviation was calculated from a value of a percentage of the number of voids having a cross-sectional area of 0.1 $mm^2$ or less each of from the position A to the position B, from the position B to the position C, and from the position C to the position D in one cross section.

The standard deviation was similarly calculated for each of the remaining nine cross sections.

Among the obtained standard deviations, a maximum value was taken as an evaluation value of the standard deviation B.

<Measurement and Evaluation of Degree of Orientation XA/XB of Fibrous Region>

For each of the protein food materials 1 to 9 obtained in Examples and Comparative Examples, polarized ATR-IR measurement was performed at three locations by the measurement method described above, and the intensity ratios XA and XB were calculated from the average value of the obtained peak intensity measurement results. Next, a degree of orientation XA/XB of the fibrous region was calculated from the values of the intensity ratios XA and XB.

<Evaluation of Fibrous Texture>

The protein food materials 1 to 9 and C1 to C6 were immersed in water at 85°C for 30 minutes to absorb water. Each of the protein food materials was taken out from the water bath, drained, and returned to room temperature, the protein food material was torn by hand in a fiber direction to obtain a cross section, and a sensory evaluation of fibrous texture was performed.

The evaluation points are shown below. The evaluation results were obtained by averaging the values obtained from five evaluators and rounding off the first decimal place.

An evaluation point of "3" or higher was evaluated as having a "fibrous texture imitating livestock meat", and the most excellent evaluation point was "5".

-Evaluation Points-

5 points: The fibrous appearance can be clearly confirmed over 85% or more of the entire cross section, and excellent fibrous texture is felt.

4 points: The fibrous appearance can be confirmed over from 55% to less than 85% of the entire cross section, and a fibrous texture is felt.

3 points: The fibrous appearance can be confirmed over from 35% to less than 55% of the entire cross section, and a fibrous texture is felt in some parts.

2 points: The fibrous appearance can be confirmed in less than 35% of the entire cross section, and it is difficult to feel the fibrous texture.

1 point: There is no fibrous appearance and no fibrous texture.

<Evaluation of (Chewy) Texture>

The protein food materials 1 to 9 and C1 to C6 were immersed in water at 85°C for 30 minutes to absorb water. The protein food material, having been taken out from the water bath, drained, and cut into 1 cm × 1 cm pieces, was put in the mouth at room temperature, and a sensory evaluation of the chewy texture when chewing with the teeth was performed.

The evaluation points are shown below. The evaluation results were obtained by averaging the values obtained from five evaluators and rounding off the first decimal place.

An evaluation point of "3" or higher was evaluated as having the "chewy texture", and the most excellent evaluation point was "5".

-Evaluation Points-

5 points: During chewing, a meat-like chewy texture is felt.

4 points: During chewing, the protein food material is slightly soft, but a meat-like chewy texture is felt.

3 points: During chewing, the protein food material is soft, but a meat-like chewy texture is felt.

2 points: During chewing, it is difficult to feel a meat-like chewy texture.

1 point: During chewing, a meat-like chewy texture is not felt.

<Evaluation of Meat-Like Color>

Each of the protein food materials 1 to 9 and C1 to C6 was cut into 5 cm × 5 cm pieces to prepare an evaluation sample.

Evaluation of a meat-like color was performed by visual observation by ten evaluators. The evaluation points are shown below. The evaluation results were obtained by averaging the evaluation points obtained from ten evaluators and rounding off the first decimal place.

An evaluation point of "2" or higher was evaluated as having a meat-like color, and the most excellent evaluation point was "3".

-Evaluation Points-

3 points: The color was similar to that of cooked meat (brown).

2 points: The color was close to that of cooked meat (brown).

1 point: The color was different from that of cooked meat.

<Evaluation of Presence or Absence of Scorching>

The protein food materials 1 to 9 and C1 to C6 immediately after being discharged from the discharge die mounted on the twin screw extruder were visually observed, and the presence or absence of scorching was evaluated.

In the protein food materials 1 to 9 and C1 to C5, no scorching occurred.

In the protein food material C6, scorching occurred.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Composition*1 | Defatted soybean powder | 49 | 49 | 49 | 49 | 49 | 49 | 49 | 49 | 48.65 |
| | Wheat gluten | 21 | 21 | 21 | 21 | 21 | 21 | 21 | 21 | 20.85 |
| | Colorant | 0 | 0 | 0 | 0 | 0 | 0 | 0 | 0 | 0.5 |
| | Moisture | 30 | 30 | 30 | 30 | 30 | 30 | 30 | 30 | 30 |
| Extrusion section | Temperature (°C) of "protein-containing mixture" at outlet | 160 | 160 | 160 | 150 | 170 | 160 | 160 | 160 | 160 |
| Discharge die | Die length (mm) | 440 | 440 | 440 | 440 | 440 | 200 | 650 | 440 | 440 |
| | Lip clearance (mm) | 3 | 3 | 3 | 3 | 3 | 3 | 3 | 3 | 3 |
| | Die length/Lip clearance | 147 | 147 | 147 | 147 | 147 | 67 | 217 | 147 | 147 |
| | Base temperature (°C) at outlet | 110 | 95 | 130 | 110 | 120 | 120 | 110 | 110 | t10 |
| | Temperature (°C) of "protein-containing mixture" at outlet | 110 | 95 | 130 | 110 | 120 | 120 | 110 | 110 | 110 |
| | Temperature drop rate (°C/mm) of "protein-containing mixture" from outlet of extrusion section to outlet of discharge die | 0.11 | 0.15 | 0.07 | 0.09 | 0.11 | 0.20 | 0.08 | 0.11 | 0.11 |
| | Pressure drop maximum rate (MPa/mm) from outlet of extrusion section to outlet of discharge die | 0.04 | 0.04 | 0.03 | 0.04 | 0.04 | 0.02 | 0.08 | 0.04 | 0.04 |
| | Swelling start point position (distance from outlet of discharge die) mm | 200 | 250 | 10 | 230 | 50 | 60 | 280 | 200 | 80 |
| | Temperature (°C) of "protein-containing mixture" at swelling start point | 132 | 128 | 135 | 130 | 125 | 120 | 128 | 132 | 132 |
| | Apparent viscosity (Pa·s) of "protein-containing mixture" at swelling start point | 507 | 830 | 159 | 605 | 775 | 950 | 798 | 455 | 489 |
| | Presence or absence of pressure control mechanism | Absent | Absent | Absent | Absent | Absent | Absent | Absent | Present | Absent |

EP 4 520 185 B1

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Measurements and evaluations | Number percentage (%) of voids of 0.1 mm² or less/average thickness (μm) of wall | 81%/95 μm | 80%/92 μm | 56%/168 μm | 52%/187 μm | 67%/123 μm | 62%/148 μm | 80%/75 μm | 81 %/98 μm | 73%/99 μm |
| | Number of voids per cross-sectional area (number/mm²) | 2.2 | 2.1 | 0.7 | 0.6 | 1.2 | 1 | 2 | 2.2 | 2.2 |
| | Average value of aspect ratios of voids | 11.6 | 13.0 | 5.6 | 5.1 | 9.1 | 7.5 | 13.6 | 11.6 | 11.6 |
| | Average value of angles at which major axes of voids intersect with each other (°) | 6.8° | 8.0° | 25.3° | 28.2° | 17.5° | 19.2° | 6.6° | 6.8° | 6.8° |
| | Degree of orientation XA/XB of fibrous region | 1.190 | 1.134 | 1.044 | 1.027 | 1.101 | 1.082 | 1.196 | 1.187 | 1.131 |
| | Standard deviation A (longitudinal direction)/Standard deviation B (width direction) | 8%/10% | 8%/10% | 17%/19% | 18%/20% | 12%/14% | 14%/15% | 14%/15% | 5%/6% | 8%/10% |
| | Fibrous texture | 5 | 5 | 3 | 3 | 4 | 4 | 5 | 5 | 5 |
| | (Chewy) texture | 5 | 5 | 3 | 3 | 4 | 4 | 5 | 5 | 5 |
| | Meat-like color | 2 | 2 | 2 | 2 | 2 | 2 | 2 | 2 | 3 |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition*1 | | Defatted soybean powder | 49 | 49 | 49 | 49 | 49 | 49 |
| | | Wheat gluten | 21 | 21 | 21 | 21 | 21 | 21 |
| | | Colorant | 0 | 0 | 0 | 0 | 0 | 0 |
| | | Moisture | 30 | 30 | 30 | 30 | 30 | 30 |
| Extrusion section | | Temperature (°C) of "protein-containing mixture" at outlet | 160 | 160 | 160 | 160 | 140 | 180 |
| Discharge die | | Die length (mm) | 40 | 150 | 440 | 440 | 440 | 440 |
| | | Lip clearance (mm) | 3 | 5 | 3 | 3 | 3 | 3 |
| | | Die length/Lip clearance | 13 | 30 | 147 | 147 | 147 | 147 |
| | | Base temperature (°C) at outlet | 100 | 100 | 65 | 80 | 110 | 105 |
| | | Temperature (°C) of "protein-containing mixture" at outlet | 100 | 100 | 65 | 80 | 110 | 105 |
| | | Temperature drop rate (°C/mm) of "protein-containing mixture" from outlet of extrusion section to outlet of discharge die | 1.50 | 0.40 | 0.22 | 0.18 | 0.07 | 0.17 |
| | | Pressure drop maximum rate (MPa/mm) from outlet of extrusion section to outlet of discharge die | 0.01 | 0.01 | - | - | - | - |
| | | Swelling start point position (distance from outlet of discharge die) mm | 0 | 0 | Not swollen | 0 | - | - |
| | | Temperature (°C) of "protein-containing mixture" at swelling start point | 100 | 100 | - | - | - | - |
| | | Apparent viscosity (Pa·s) of "protein-containing mixture" at swelling start point | - | - | - | - | - | - |
| | | Presence or absence of pressure control mechanism | Absent | Absent | Absent | Absent | Absent | Absent |

(continued)

| Measurements and evaluations | | Comparative Example 1 | Comparative Example 2 | Comparative Example 3 | Comparative Example 4 | Comparative Example 5 | Comparative Example 6 |
|---|---|---|---|---|---|---|---|
| | Number percentage (%) of voids of 0.1 mm$^2$ or less/average thickness ($\mu$m) of wall | 22%/25$\mu$m | 45%/40$\mu$m | Not swollen | 80%/250$\mu$m | 32%/40$\mu$m | - |
| | Number of voids per cross-sectional area (number/mm$^2$) | - | - | - | - | - | - |
| | Average value of aspect ratios of voids | - | - | - | - | - | - |
| | Average value of angles at which major axes of voids intersect with each other (°) | - | - | - | - | - | - |
| | Degree of orientation XA/XB of fibrous region | - | - | - | - | - | - |
| | Standard deviation A (longitudinal direction)/Standard deviation B (width direction) | - | - | - | - | - | - |
| | Fibrous texture | 1 | 2 | 1 | 2 | 1 | - |
| | (Chewy) texture | 1 | 2 | 1 | 2 | 1 | - |
| | Meat-like color | 2 | 2 | 2 | 2 | 2 | 1 |

As shown in Tables 1 and 2, the protein food material of each of Examples obtained by the production method according to the disclosure (the protein food material according to the disclosure) had a fibrous texture imitating livestock meat and a chewy texture.

[Preparation of Molded Meat Alternative]

The following first step to third step were performed using the protein food materials 1 to 9 and C1 to C5 obtained in the Examples and Comparative Examples to prepare molded meat alternatives 1 to 9 of Examples 1 to 9 and molded meat alternatives C1 to C5 of Comparative Examples 1 to 5, respectively.

The protein food material C6 of Comparative Example 6 in which scorching occurred was not used for preparation of the molded meat alternative.

(First Step)

The protein food material was boiled in 3 L (liter) of boiling water for 10 minutes, and water was drained out. The protein food material after draining out the water was cut to a length of about 100 mm and torn along a fiber axis direction so as to have a width of about 5 mm.

The torn protein food material was boiled for 10 minutes in an aqueous solution containing SAN GRILL BEEF TASTE 3457E (a seasoning not using an animal material, manufactured by San-Ei Gen F.F.I. Inc.) as a seasoning (concentration; 5% by mass of the seasoning with respect to the entire aqueous solution) to obtain a strip-shaped protein food material.

The strip-shaped protein food material was immersed in an aqueous solution containing SAN BEET CONC No. 4948 (a colorant, manufactured by San-Ei Gen F.F.I. Inc.) as a colorant (concentration; 3% by mass of the colorant with respect to the entire aqueous solution).

Thereafter, 7.5 g of GENUTINE 310-C (carrageenan, manufactured by Sansho Co., Ltd.) containing a thermally reversible gel-forming polysaccharide and 7.5 g of ALGINIC ACID 429S (sodium alginate containing a curing agent, manufactured by KIMICA Corporation) containing a thermally irreversible gel-forming polysaccharide as binders, and 30 g of water were added to 150 g of the strip-shaped protein food material, and the mixture was uniformly mixed, thereby obtaining a first step mixture.

(Preparation of Fat lump Composition)

(1) Droplet Forming Step

An aqueous phase and an oil phase were prepared as follows.

Aqueous phase: 99.5 parts by mass of tap water and 0.5 parts by mass of RYOTO SUGAR ESTER M-1695 (manufactured by Mitsubishi Chemical Corporation) as a surfactant were weighed to a total of 5 kg, and the weighed materials were stirred using THREE-ONE MOTOR (manufactured by Shinto Scientific Co., Ltd.) for 30 minutes to be completely dissolved.

Oil phase: 1 kg of coconut oil (product name: ORGANIC PREMIUM COCONUT OIL (M041), manufactured by COCOWELL CORPORATION) as an oil and/or fat was weighed.

Membrane emulsification was performed using a pipe-shaped SPG membrane (manufactured by SPG Technology Co., Ltd., pore diameter of 50 $\mu$m) with an aqueous phase as a continuous phase and an oil phase as a dispersed phase. Specifically, the pipe-shaped SPG membrane was inserted and disposed in a tubular container, and from one end to the other end of the container, the aqueous phase was allowed to flow at a flow rate of 50 mL/min inside the pipe-shaped SPG membrane (inner conduit), and the oil phase was allowed to flow at a flow rate of 10 mL/min outside the pipe-shaped SPG membrane (outer conduit (flow path between the container and the SPG membrane)).

As a result, an aqueous solution containing droplets containing an oil and/or fat (hereinafter, also referred to as "droplet dispersion") was obtained.

Note that the droplet containing an oil and/or fat (the granular material containing an oil and/or fat) had a particle diameter of 190 $\mu$m and a CV value of 19%.

The particle diameter and CV value of the droplet containing an oil and/or fat were measured by a transmission optical microscope.

The droplet dispersion collected in a petri dish was observed with a transmission optical microscope and imaged at an objective magnification of 5 times. 200 or more images of the droplets containing an oil and/or fat included in a screen obtained by imagining were selected, and an equivalent circle diameter of each droplet (a diameter of a perfect circle corresponding to an area of the image of the droplet) was calculated by image processing software (for example, ImageJ). An arithmetic average value of the calculated equivalent circle diameters of the respective droplets was calculated, and the arithmetic average value was defined as an "average particle diameter of droplets containing an oil and/or fat".

The CV value of the droplet containing an oil and/or fat is a value determined by the following equation.

CV value (%) of droplet containing an oil and/or fat = (Standard deviation of equivalent circle diameter of droplets containing an oil and/or fat/Average particle diameter of droplets containing an oil and/or fat) $\times$ 100

The standard deviation of the equivalent circle diameter of the droplets containing an oil and/or fat is a standard deviation of the equivalent circle diameters of 200 droplets containing an oil and/or fat calculated in the measurement of the average particle diameter of the droplets containing an oil and/or fat.

(2) Oil and/or fat Solidifying Step

The droplet dispersion was added to a separatory funnel and then allowed to stand for 30 minutes. Since the droplet dispersion was separated into a phase containing a droplet containing an oil and/or fat and an aqueous phase, the aqueous phase was discharged from the separatory funnel, and the phase containing the droplet containing an oil and/or fat was collected.

The collected phase containing the droplet containing an oil and/or fat was allowed to stand and cooled in a refrigerator having an internal temperature of 5°C for 1 hour, and solidification of the oil and/or fat was performed, thereby obtaining an aqueous solution containing particles (hereinafter, also referred to as "particle-containing liquid").

(3) Crosslinking Step

1 part by mass of sodium alginate (KIMICA ALGIN I-1, manufactured by KIMICA Corporation) as an edible ionically crosslinkable polymer, 0.5 parts by mass of RYOTO SUGAR ESTER M-1695 (manufactured by Mitsubishi Chemical Corporation) as a surfactant, and 98.5 parts by mass of tap water were mixed to obtain an aqueous solution containing an edible ionically crosslinkable polymer (hereinafter, also referred to as "ionically crosslinkable polymer solution").

100 parts by mass of the particle-containing liquid was added to 100 parts by mass of the ionically crosslinkable polymer solution, and the mixture was slowly stirred with a stirrer (THREE ONE MOTOR, manufactured by Yamato Scientific Co., Ltd.), thereby obtaining a solution 1. The obtained solution 1 was poured into a stainless steel vat so that a thickness of the solution was 3 mm.

1 part by mass of calcium chloride (food additive grade, manufactured by FUJIFILM Wako Pure Chemical Corporation) as a salt containing a cation was dissolved in 99 parts by mass of tap water to prepare an aqueous solution 1 containing a cation. The aqueous solution 1 containing the same mass of the cation as the solution 1 contained in the stainless vat was poured into the stainless vat, and the mixed solution was allowed to stand in a refrigerator having an internal temperature of 5°C for 2 hours to crosslink (gel) the edible ionically crosslinkable polymer, thereby obtaining a crude fat lump composition.

The crude fat lump composition was washed with tap water, moisture on a surface was wiped off with KIM TOWEL (registered trademark, manufactured by NIPPON PAPER CRECIA CO., LTD.), and the wiped crude fat lump composition was cut into bars of about 1 mm $\times$ 1 mm $\times$ 30 mm. The oil and/or fat attached to the surface of the cut crude fat lump composition was washed with edible ethanol to obtain a fat lump composition B.

(Second Step)

The fat lump composition B was mixed with the mixture obtained in the first step in an amount of 20% of the mass of the mixture, the mixture was formed into a spherical shape having a diameter of about 60 mm, and then the shaped mixture was stretched by hand, thereby obtaining a post-stretched mixture having a stretch ratio of about 6 times.

(Third Step)

The post-stretched mixture was cut to a length of the thickness (20 mm) of the steak in a direction orthogonal to the fiber direction of the protein food material contained in the post-stretched mixture so as to have a fillet shape of the steak, and a plurality of cut pieces were bundled so that the fiber direction was oriented in the thickness direction of the steak, thereby obtaining a molded product. The molded product was vacuum-pouched and then heated for 1 minute so that the temperature inside the molded product was 75°C. Thereafter, the molded product was rapidly cooled with ice water to obtain a chunk meat-like molded meat alternative.

The following evaluation was performed using the obtained molded meat alternatives 1 to 9 and C1 to C5.

The evaluation results are shown in Table 3.

[Evaluation of Molded Meat Alternative]

<Fibrous Texture of Cross Section>

The molded meat alternative was cut with a knife parallel to the fiber direction and placed so that the fiber direction was vertical.
The cross section thereof was visually observed by five people, and the fibrous texture (meat texture) was observed. The evaluation points are shown below.
The evaluation results were obtained by averaging the values obtained from five evaluators and rounding off the first decimal place.
An evaluation point of "3" or higher was evaluated as having a "fibrous texture imitating livestock meat", and the most excellent evaluation point was "5".

-Evaluation Points-

5 points: The fibrous appearance in the longitudinal direction can be clearly confirmed over 85% or more of the entire cross section, and an excellent meat texture is felt.
4 points: The fibrous appearance in the longitudinal direction can be confirmed over from 55% to less than 85% of the entire cross section, and a meat texture is felt.
3 points: The fibrous appearance in the longitudinal direction can be confirmed over from 35% to less than 55% of the entire cross section, and a meat texture is felt in some parts.
2 points: There is no fibrous appearance in the longitudinal direction, and it is difficult to feel a meat texture.
1 point: There is no fibrous appearance and no meat texture.

<Evaluation of (Chewy) Texture>

The molded meat alternative cut into 1 cm $\times$ 1 cm pieces was put in the mouth at room temperature and chewed, and the texture was evaluated. The chewy texture of the molded meat alternative was evaluated by five people. The evaluation points are shown below. The evaluation results were obtained by averaging the values obtained from five evaluators and rounding off the first decimal place.
An evaluation point of "3" or higher was evaluated as having a "chewy texture", and the most excellent evaluation point was "5".

-Evaluation Points-

5 points: A meat-like chewy texture is felt and the molded meat alternative is delicious.
4 points: A slightly soft meat-like chewy texture is felt and the molded meat alternative is delicious.
3 points: A soft meat-like chewy texture is felt and the molded meat alternative is delicious.
2 points: It is difficult to feel a meat-like chewy texture.
1 point: A meat-like chewy texture is not felt.

[Table 3]

|  | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|
| Fibrous texture | 5 | 5 | 3 | 3 | 4 | 4 | 5 | 5 | 5 | 1 | 2 | 1 | 2 | 1 |
| (Chewy) texture | 5 | 5 | 3 | 3 | 4 | 4 | 5 | 5 | 5 | 1 | 2 | 1 | 2 | 1 |

As shown in Table 3, it was found that the molded meat alternatives of Examples 1 to 9 using the protein food material obtained by the production method of the disclosure was excellent in the fibrous texture of the cross section and the (chewy) texture.

It was found that the protein food material obtained by the production method according to the disclosure (the protein food material according to the disclosure) was useful as a protein food material for a molded meat alternative.

## Claims

1. A method of producing a protein food material, the method comprising:

   kneading a protein-containing mixture containing a vegetable protein and water by pressurizing and heating the protein-containing mixture in an extrusion section of a twin screw extruder; and

   after kneading, extruding the kneaded protein-containing mixture at a temperature of from 150°C to lower than 180°C in an outlet of the extrusion section while swelling the kneaded protein-containing mixture inside a discharge die mounted at a downstream end of the extrusion section in an extrusion direction.

2. The method according to claim 1, wherein a temperature drop rate from the outlet of the extrusion section to an outlet of the discharge die is 0.2°C/mm or less, and a temperature of the protein-containing mixture at the outlet of the discharge die is from 95°C to 130°C.

3. The method according to claim 1 or 2, wherein a pressure drop maximum rate from the outlet of the extrusion section to an outlet of the discharge die is 0.02 MPa/mm or more.

4. The method according to claim 1 or 2, wherein a pressure at a position located 10 mm upstream from an outlet of the discharge die in the extrusion direction is 1.0 MPa or less.

5. The method according to claim 1 or 2, wherein a length of the discharge die in the extrusion direction is 200 mm or more.

6. The method according to claim 1 or 2, wherein a value obtained by dividing a length of the discharge die in the extrusion direction by a lip clearance of the discharge die is 40 or more.

7. The method of producing a protein food material according to claim 1 or 2, wherein a temperature of the protein-containing mixture at a swelling start point inside the discharge die is from 120°C to 140°C.

8. The method according to claim 7, wherein the temperature of the protein-containing mixture at the swelling start point is from 125°C to 135°C.

9. The method according to claim 1 or 2, wherein an apparent viscosity of the protein-containing mixture at a swelling start point inside the discharge die is from 1 Pa s to 5,000 Pa s.

10. The method claim 9, wherein the apparent viscosity of the protein-containing mixture at the swelling start point inside the discharge die is from 1 Pa s to 1,000 Pa s.

11. The method according to claim 1 or 2, wherein a position at which the protein-containing mixture begins to be swollen inside the discharge die is a position located 10 mm or more upstream from an outlet of the discharge die in the extrusion direction.

12. The method according to claim 1 or 2, wherein the discharge die has a temperature control mechanism.

13. The method according to claim 1 or 2, wherein a pressure reduction mechanism is provided inside the discharge die.

14. The method according to claim 13, wherein the pressure reduction mechanism is an uneven shape provided inside the discharge die.

15. The method according to claim 1 or 2, wherein the vegetable protein is at least one selected from the group consisting of a defatted soybean protein and a wheat gluten.

16. The method according to claim 1 or 2, wherein the protein-containing mixture further contains a colorant.

17. A protein food material, comprising a vegetable protein, the protein food material having a fibrous region in at least a part thereof and a porous structure, wherein a percentage of a number of voids having a cross-sectional area of 0.1 mm$^2$ or less in a cross section parallel to a direction orthogonal to a fiber direction is 50% or more with respect to a number of all voids present in the cross section, and an average thickness of a wall separating the voids from each other is 200 $\mu$m or less.

18. The protein food material according to claim 17, wherein the number of voids per cross-sectional area is 0.5 number/mm$^2$ or more in the cross section parallel to the direction orthogonal to the fiber direction.

19. The protein food material according to claim 17 or 18, wherein an average value of ratios of a length of a major axis to a length of a minor axis of the voids present in a cross section parallel to the fiber direction of the protein food material is 2 or more.

20. The protein food material according to claim 17 or 18, wherein an average value of angles at which major axes of the voids intersect with each other is 30° or less in a cross section parallel to the fiber direction.

21. The protein food material according to claim 17 or 18, wherein a degree of orientation XA/XB satisfies 1.005 ≤ XA/XB, in which, in an infrared absorption spectrum obtained by measuring the fibrous region by a polarized infrared total reflection absorption measurement method, XA is an intensity ratio of a peak intensity of an amide I band to a peak intensity of an amide II band measured by irradiating the fibrous region with polarized light parallel to the fiber direction of the fibrous region, and XB is an intensity ratio of a peak intensity of an amide I band to a peak intensity of an amide II band measured by irradiating the fibrous region with polarized light perpendicular to the fiber direction of the fibrous region.

22. The protein food material according to claim 17 or 18, wherein, regarding the percentage of the number of voids having a cross-sectional area of 0.1 mm$^2$ or less in the cross section parallel to the direction orthogonal to the fiber direction, a standard deviation of a value when measured at ten points respectively separated by 30 cm along a longitudinal direction of the fiber direction is 20% or less, and a standard deviation of a value when measured at three points respectively separated by 1.5 cm along a width direction is 20% or less.

23. A molded meat alternative, comprising the protein food material according to claim 17 or 18.

**Patentansprüche**

1. Verfahren des Produzierens eines Protein-Lebensmittelmaterials, wobei das Verfahren umfasst:

    Kneten einer proteinhaltigen Mischung, die ein pflanzliches Protein und Wasser enthält, durch Pressen und Erwärmen der proteinhaltigen Mischung in einem Extrusionsabschnitt eines Zwillingsschneckenextruders; und nach Kneten, Extrudieren des gekneteten proteinhaltigen Gemischs bei einer Temperatur von 150 °C bis zu niedriger als 180 °C an einem Auslass des Extrusionsabschnitts unter gleichzeitiger Quellung des gekneteten proteinhaltigen Gemischs innerhalb einer Abgabedüse, die an einem stromabwärts gelegenen Ende des Extrusionsabschnitts in einer Extrusionsrichtung montiert ist.

2. Verfahren nach Anspruch 1, wobei eine Temperaturabfallrate von dem Auslass des Extrusionsabschnitts zu einem Auslass der Abgabedüse 0,2 °C/mm oder weniger beträgt und eine Temperatur der proteinhaltigen Mischung an dem Auslass der Abgabedüse von 95 °C bis 130 °C beträgt.

3. Verfahren nach Anspruch 1 oder 2, wobei eine Druckabfall-Maximalrate von dem Auslass des Extrusionsabschnitts zu einem Auslass der Abgabedüse 0,02 MPa/mm oder mehr beträgt.

4. Verfahren nach Anspruch 1 oder 2, wobei ein Druck an einer Position, die 10 mm stromaufwärts von einem Auslass der Abgasdüse in der Extrusionsrichtung liegt, 1,0 MPa oder weniger beträgt.

5. Verfahren nach Anspruch 1 oder 2, wobei eine Länge der Abgabedüse in der Extrusionsrichtung 200 mm oder mehr beträgt.

6. Verfahren nach Anspruch 1 oder 2, wobei ein Wert, der durch Teilen einer Länge der Abgabedüse in der Extrusionsrichtung durch ein Lippenspiel der Abgabedüse erhalten wird, 40 oder mehr beträgt.

7. Verfahren des Produzierens eines Protein-Lebensmittelmaterials nach Anspruch 1 oder 2, wobei eine Temperatur des proteinhaltigen Gemischs an einem Quellstartpunkt innerhalb der Abgabedüse von 120 °C bis 140 °C beträgt.

8. Verfahren nach Anspruch 7, wobei die Temperatur der proteinhaltigen Mischung an dem Quellstartpunkt von 125 °C bis 135 °C beträgt.

9. Verfahren nach Anspruch 1 oder 2, wobei eine scheinbare Viskosität der proteinhaltigen Mischung an einem Quellstartpunkt innerhalb der Abgabedüse von 1 Pa s bis 5.000 Pa s beträgt.

10. Verfahren nach Anspruch 9, wobei die scheinbare Viskosität der proteinhaltigen Mischung an dem Quellstartpunkt innerhalb der Abgasdüse von 1 Pa s bis 1.000 Pa s beträgt.

11. Verfahren nach Anspruch 1 oder 2, wobei eine Position, an der die proteinhaltige Mischung innerhalb der Abgabedüse zu quellen beginnt, eine Position ist, die sich 10 mm oder mehr stromaufwärts von einem Auslass der Abgabedüse in der Extrusionsrichtung befindet.

12. Verfahren nach Anspruch 1 oder 2, wobei die Abgabedüse einen Temperatursteuermechanismus aufweist.

13. Verfahren nach Anspruch 1 oder 2, wobei ein Druckreduzierungsmechanismus innerhalb der Abgabedüse vorgesehen ist.

14. Verfahren nach Anspruch 13, wobei der Druckreduktionsmechanismus eine unebene Form ist, die innerhalb der Abgabedüse vorgesehen ist.

15. Verfahren nach Anspruch 1 oder 2, wobei das pflanzliche Protein mindestens eines, das aus der Gruppe, die aus einem entfetteten Sojaprotein und einem Weizengluten besteht, ausgewählt ist, ist.

16. Verfahren nach Anspruch 1 oder 2, wobei die proteinhaltige Mischung ferner ein Färbemittel enthält.

17. Protein-Lebensmittelmaterial, das ein pflanzliches Protein umfasst, wobei das Protein-Lebensmittelmaterial einen faserigen Bereich in mindestens einem Teil davon und eine poröse Struktur aufweist,
wobei ein Prozentsatz einer Anzahl von Hohlräumen mit einer Querschnittsfläche von $0,1$ mm$^2$ oder weniger in einem Querschnitt parallel zu einer Richtung senkrecht zu einer Faserrichtung 50 % oder mehr in Bezug auf eine Anzahl aller Hohlräume, die in dem Querschnitt vorhanden sind, beträgt und eine durchschnittliche Dicke einer Wand, die die Hohlräume voneinander trennt, 200 $\mu$m oder weniger beträgt.

18. Protein-Lebensmittelmaterial nach Anspruch 17, wobei die Anzahl an Hohlräumen pro Querschnittsfläche 0,5 Anzahl/mm$^2$ oder mehr in dem Querschnitt parallel zu der Richtung senkrecht zu der Faserrichtung beträgt.

19. Protein-Lebensmittelmaterial nach Anspruch 17 oder 18, wobei ein Durchschnittswert von Verhältnissen einer Länge einer Hauptachse zu einer Länge einer Nebenachse der Hohlräume, die in einem Querschnitt parallel zu der Faserrichtung des Protein-Lebensmittelmaterials vorhanden sind, 2 oder mehr beträgt.

20. Protein-Lebensmittelmaterial nach Anspruch 17 oder 18, wobei ein Durchschnittswert von Winkeln, unter denen Hauptachsen der Hohlräume miteinander schneiden, 30° oder weniger in einem Querschnitt parallel zu der Faserrichtung beträgt.

21. Proteinnahrungsmittel nach Anspruch 17 oder 18, wobei ein Grad an Ausrichtung XA/XB $1,005 \leq$ XA/XB erfüllt, wobei in einem Infrarot-Absorptionsspektrum, das durch Messen des faserigen Bereichs durch ein polarisiertes Infrarot-Totalreflexions-Absorptionsmessverfahren erhalten wird, XA ein Intensitätsverhältnis einer Spitzenintensität eines Amid I-Bandes zu einer Spitzenintensität eines Amid II-Bandes ist, die durch Bestrahlen des faserigen Bereichs mit polarisiertem Licht parallel zu der Faserrichtung des faserigen Bereichs gemessen wird, und XB ein Intensitätsverhältnis einer Spitzenintensität eines Amid I-Bandes zu einer Spitzenintensität eines Amid II-Bandes ist, die durch Bestrahlen des faserigen Bereichs mit polarisiertem Licht senkrecht zu der Faserrichtung des faserigen Bereichs gemessen wird.

22. Protein-Lebensmittelmaterial nach Anspruch 17 oder 18, wobei in Bezug auf den Prozentsatz der Anzahl an Hohlräumen mit einer Querschnittsfläche von 0,1 mm$^2$ oder weniger in dem Querschnitt parallel zu der Richtung senkrecht zu der Faserrichtung eine Standardabweichung eines Werts, wenn an zehn Punkten gemessen, die jeweils um 30 cm entlang einer Längsrichtung der Faserrichtung getrennt sind, 20 % oder weniger beträgt und eine Standardabweichung eines Werts, wenn an drei Punkten gemessen, die jeweils um 1,5 cm entlang einer Breitenrichtung getrennt sind, 20 % oder weniger beträgt.

23. Geformte Fleischalternative, die das Protein-Lebensmittelmaterial nach Anspruch 17 oder 18 umfasst.

**Revendications**

1. Procédé de production d'un matériau alimentaire protéique, le procédé comprenant :

    malaxer un mélange contenant des protéines contenant une protéine végétale et de l'eau en pressurisant et en chauffant le mélange contenant des protéines dans une section d'extrusion d'un extrudeuse à double vis ; et après le malaxage, extruder le mélange contenant des protéines malaxé à une température comprise entre 150 °C et moins de 180 °C au niveau d'une sortie de la section d'extrusion tout en faisant gonfler le mélange contenant des protéines malaxé à l'intérieur d'une filière de décharge montée à une extrémité aval de la section d'extrusion dans une direction d'extrusion.

2. Procédé selon la revendication 1, dans lequel un taux de chute de température entre la sortie de la section d'extrusion et une sortie de la filière de décharge est de 0,2 °C/mm ou moins, et une température du mélange contenant des protéines à la sortie de la filière de décharge est comprise entre 95 °C et 130 °C.

3. Procédé selon la revendication 1 ou la revendication 2, dans lequel un taux maximal de chute de pression entre la sortie de la section d'extrusion et une sortie de la filière de décharge est de 0,02 MPa/mm ou plus.

4. Procédé selon la revendication 1 ou la revendication 2, dans lequel une pression à une position située à 10 mm en amont d'une sortie de la filière de décharge dans la direction d'extrusion est de 1,0 MPa ou moins.

5. Procédé selon la revendication 1 ou la revendication 2, dans lequel une longueur de la filière de décharge dans la direction d'extrusion est de 200 mm ou plus.

6. Procédé selon la revendication 1 ou la revendication 2, dans lequel une valeur obtenue en divisant une longueur de la filière de décharge dans la direction d'extrusion par un jeu de lèvre de la filière de décharge est de 40 ou plus.

7. Procédé de production d'un matériau alimentaire protéique selon la revendication 1 ou la revendication 2, dans lequel une température du mélange contenant des protéines à un point de départ de gonflement à l'intérieur de la filière de décharge est comprise entre 120 °C et 140 °C.

8. Procédé selon la revendication 7, dans lequel la température du mélange contenant des protéines au point de départ de gonflement est comprise entre 125 °C et 135 °C.

9. Procédé selon la revendication 1 ou la revendication 2, dans lequel une viscosité apparente du mélange contenant des protéines à un point de départ de gonflement à l'intérieur de la filière de décharge est comprise entre 1 Pa.s et 5 000 Pa.s.

10. Procédé selon la revendication 9, dans lequel la viscosité apparente du mélange contenant des protéines au point de départ de gonflement à l'intérieur de la filière de décharge est comprise entre 1 Pa.s et 1 000 Pa.s.

11. Procédé selon la revendication 1 ou la revendication 2, dans lequel une position à laquelle le mélange contenant des protéines commence à gonfler à l'intérieur de la filière de décharge est une position située à 10 mm ou plus en amont d'une sortie de la filière de décharge dans la direction d'extrusion.

12. Procédé selon la revendication 1 ou la revendication 2, dans lequel la filière de décharge comporte un mécanisme de contrôle de température.

**13.** Procédé selon la revendication 1 ou la revendication 2, dans lequel un mécanisme de réduction de pression est prévu à l'intérieur de la filière de décharge.

**14.** Procédé selon la revendication 13, dans lequel le mécanisme de réduction de pression est une forme irrégulière prévue à l'intérieur de la filière de décharge.

**15.** Procédé selon la revendication 1 ou la revendication 2, dans lequel la protéine végétale est au moins une sélectionnée parmi le groupe constitué d'une protéine de soja dégraissée et d'un gluten de blé.

**16.** Procédé selon la revendication 1 ou la revendication 2, dans lequel le mélange contenant des protéines contient en outre un colorant.

**17.** Matériau alimentaire protéique, comprenant une protéine végétale, le matériau alimentaire protéique ayant une région fibreuse dans au moins une partie de celui-ci et une structure poreuse, dans lequel un pourcentage d'un nombre de vides ayant une surface de section transversale de 0,1 mm$^2$ ou moins dans une section transversale parallèle à une direction orthogonale à une direction de fibres est de 50 % ou plus par rapport à un nombre total de vides présents dans la section transversale, et une épaisseur moyenne d'une paroi séparant les vides les uns des autres est de 200 μm ou moins.

**18.** Matériau alimentaire protéique selon la revendication 17, dans lequel le nombre de vides par surface de section transversale est de 0,5 nombre/mm$^2$ ou plus dans la section transversale parallèle à la direction orthogonale à la direction de fibres.

**19.** Matériau alimentaire protéique selon la revendication 17 ou la revendication 18, dans lequel une valeur moyenne des rapports entre une longueur d'un axe majeur et une longueur d'un axe mineur des vides présents dans une section transversale parallèle à la direction de fibres du matériau alimentaire protéique est de 2 ou plus.

**20.** Matériau alimentaire protéique selon la revendication 17 ou la revendication 18, dans lequel une valeur moyenne des angles auxquels des axes majeurs des vides se croisent est de 30° ou moins dans une section transversale parallèle à la direction de fibres.

**21.** Matériau alimentaire protéique selon la revendication 17 ou la revendication 18, dans lequel un degré d'orientation XA/XB satisfait 1,005 ≤ XA/XB, où, dans un spectre d'absorption infrarouge obtenu en mesurant la région fibreuse par une méthode de mesure d'absorption par réflexion totale infrarouge polarisée, XA est un rapport d'intensité entre une intensité de pic d'une bande amide I et une intensité de pic d'une bande amide II mesuré en irradiant la région fibreuse avec une lumière polarisée parallèle à la direction de fibre de la région fibreuse, et XB est un rapport d'intensité entre une intensité de pic d'une bande amide I et une intensité de pic d'une bande amide II mesuré en irradiant la région fibreuse avec une lumière polarisée perpendiculaire à la direction de fibre de la région fibreuse.

**22.** Matériau alimentaire protéique selon la revendication 17 ou la revendication 18, dans lequel, concernant le pourcentage du nombre de vides ayant une surface de section transversale de 0,1 mm$^2$ ou moins dans la section transversale parallèle à la direction orthogonale à la direction de fibre, un écart type d'une valeur mesurée en dix points espacés respectivement de 30 cm le long d'une direction longitudinale de la direction de fibres est de 20 % ou moins, et un écart type d'une valeur mesurée en trois points espacés respectivement de 1,5 cm le long d'une direction de largeur est de 20 % ou moins.

**23.** Substitut de viande moulé, comprenant le matériau alimentaire protéique selon la revendication 17 ou la revendication 18.

# FIG.1

# FIG.2A

# FIG.2B

# FIG.2C

# FIG.2D

# FIG.3

TEMPERATURE AND PRESSURE PROFILE INSIDE DISCHARGE DIE

DISTANCE mm BETWEEN OUTLET OF EXTRUSION
SECTION TO OUTLET OF COOLING DIE

# FIG.4A

# FIG.4B

# FIG.4C

**REFERENCES CITED IN THE DESCRIPTION**

**Patent documents cited in the description**

- JP H123856 A
- JP 2020000235 A
- JP 2022160947 A